# EUROPEAN PATENT APPLICATION

(11) **EP 4 339 802 A2**
(43) Date of publication of application: **20.03.2024**
(21) Application number: 23201070.2
(22) Date of filing: 04.10.2011
(51) Int. Cl.: G06F 16/25

(54) **METHODS AND APPARATUS FOR INTEGRATED MANAGEMENT OF STRUCTURED DATA FROM VARIOUS SOURCES AND HAVING VARIOUS FORMATS**

(30) Priority: 04.10.2010 US 38966610 P
(62) Divisional of application: 11831467.3
(71) Applicant: Sempras Software, Inc., Cupertino, CA 95014 (US)
(72) Inventor: DEREMIGIO, Kevin, Cupertino, 95014 (US); WENZEL, Trent, Los Angeles, 90025 (US); WENZEL, Robert, Menlo Park, 94025 (US)
(74) Representative: K2 IP Limited

(57) **Abstract**

According to certain aspects, the invention provides advanced software architected to leverage the operational data volumes from IT. intelligent devices and machines supported and maintained by IT or end users for use by business groups or individuals in order to create a low Total Cost of Operation (TCO) processes that enable data sources to be transferred, modified, and computations performed based on the needs of the end users operating independently or within the enterprise data assets To cost effectively capture any data source and place within the enterprise' standard data structures and processes. According to another aspect, the invention provides the end user options with capability to re-structure, copy, and re-position data for corporate and end users for ongoing corporate applications via a selection of options methodology that is supported by usage of the end user versions of spreadsheet software. The purpose is to reduce or eliminate conventional programming or parameter requirements needed in current software solutions to work with data from incompatible sources. One advantage is that the invention can significantly reduce the cost from using and re-formatting these numerous, rapidly growing, incompatible volumes of operational data and information. In one implementation, the invention achieves this with, a solution supporting the end user's data criteria without being impacted by IT complexity, security and data risk issues.

## Description

### CROSS-REFERENCE TO RELATED APPLICATIONS

The present application claims priority from U.S. Prov. Appln. No. 61/389,666 filed October 4, 2010, the contents of which are incorporated herein by reference in their entirety.

### FIELD OF THE INVENTION

The present invention relates to generally to a computerized system, screen interface, protocols and methods for leveraging operational data volumes for data integration, and more particularly to methods and apparatuses for the rapid movement, format change and positioning of disparate data sources for information technology for IT, expert users and end users to manage and utilize operational structured, spreadsheet, and flat file data.

### BACKGROUND OF THE INVENTION

The present invention relates generally to computer software and in particular to access and optimization of data methods and processes for providing direct user access to multiple, disparate data sources with out the user possessing experience or training in the specific data management software file structure and methodologies and without intervening software processing methods.

Methods for accessing data directly from any authorized access source in order to extract compute and process data structures are desired for the user's specified data requirements. These data processes should be based on an open platform structure being non-vendor specific. The processes and data store structures should be done based upon the skill set of the average end user who does not possess extensive data technical skills or trained in IT level database or file management technology.

In conventional data management systems and data processing, Extract, Transform and Load (ETL) software, there are specific and technical parameter based design processes employed to utilize structured data sources. The design embodiment of this form of data software is vendor centric and based on 25 year old legacy system designs originally configured for main frame data processes and applications. The technical complexity of design,of modifying, supporting and using this base design has become more difficult and expensive.

In many conventional systems, the direct access by the end user of data sources, specifically files and database is restricted or not permitted. Furthermore, the applications that do deliver of data to the user are also managed options that permit access to a only specific set of data files or tables

Program functionality and training costs prevents the average business end user or IT trained individual from accessing data sources. They do not enable the one off processing of data by business users. Considerations of data source security, version consistency and integrity are critical technical considerations in a global web technical infrastructure data management processes. The time, expense and training is not cost justified in providing access to the users.

At the same time the level of complexity of application and data software stacks has significantly increased due to the interface and integration of independent, incompatible software acquisitions into single platforms by the major software vendors, including: Microsoft, Oracle, SAP, IBM, HP, etc. The vendors are creating complex software stacks that are inflexible and inefficient application platforms

In creating the vendor application silos, the software vendors have taken data management and process software platforms and placed them inside the application silos. As of the filing of this application the ETL software platform is being placed as a support platform for the specific, proprietary application process requirements source or processed data needs.

The trend of outsourcing technical skills to third party consult or vendor consult services firms is moving the technology expertise from the enterprise to independent third party companies. There is no documentation of the applications other than the processes of the consult firms - if any. The data and application systems flexibility is being replaced by a software vendor centric software stack that lacks design flexibility in the application software, again reducing the capacity options for end users to leverage the data and software investments made by their companies or organizations

The result is the average end user -- be they business or subject matter expert -- is becoming further removed from data sources and permitted limited access via the vendor application stack. Such software as Business Intelligence has been positioned, along with report generator software as the primary access point for the organization's or enterprise's data

The conventional process for providing the user with greater data file and table access is with extended technical training that is both expensive and infrequently available. The result for the user and the enterprise or organization is users are bypassing the data management systems in place by either creating their own data, retrieving data from external sources, or getting data via backdoor within their organization. The users receive limited direct IT support while their data requirements and the diversity of data are increasing. These files and tables are in spreadsheet worksheets and low end function database software. These are the only data tools and management the user has at their basic skill set to work with data to accomplish their job responsibilities.

The result for IT and data management systems and processes is there is a large amount of structured or key based data that is in an ungoverned status within the personal compute platforms and department level server and server storage. The IT staff has neither the budget nor the staffing to retrieve and manage these ungoverned sources. There is no Total Cost of Acquisition (TCA) metric for an IT staff to do a program of this type.

The average user, based on studies first conducted in the 1990's, has the following technical skills profile for 98% plus of the U.S. population:
- Use an office suite software (Word processing, Presentations, Spreadsheet)
- will use approximately 10% to 20% of the office suite software functionality
- Has the ability to utilize email processes and attachment protocols
- Has the ability to conduct search for information on the web by standard search arguments
- Can work with social media software and mobile appliances/devices (4G phones and tablets)
- Can load software to compute platform from web sources or shrink wrap media

These issues result in the options available to the user for their data process and management are primarily the use of spreadsheet software such as Microsoft's EXCEL or simple data base software were the user controls the data and its management. The solutions are viable due to the independence of this type of software and its low TCA and relatively low direct Total Cost of Ownership (TCO).

There is a divergence in the increasing number of levels in a vendor's software stack versus the long term level of a user's compute platform skills remaining constant for the past 15 to 20 years. The result is users are finding other software data access or creation compute platform options to perform their jobs with software within their skill sets. This trend is confirmed by the function level increases found in spreadsheet software.

The complexity levels in software are increasing for companies and their users. This is due to the number of levels of process and mid tier infrastructure, the large number of application choices, and the scope of a software systems implementation or version upgrade is an expensive, time consuming project process. The review of the level of commands and parameter command options indicates how complex software has become. This complexity has opened a Technology Gap between the software and the user community of an organization in its skills, cost to access data sources and cost to maintain. Complex systems increase in expense as they become more complicated and inflexible as the number of data, operations, and application layers (stacks) and options increase.

Second, is the rapid acceptance of intelligent mobile appliance platforms (phones, tablet devices). The basis is single level applications and data supporting the applications. They are designed for simplicity, rapid learning and productivity. The speed of acceptance by users indicates what the design and function level of software compute platforms needs to be.

Third, the promotion by hardware and software vendors for the cloud computing platforms solution that employs main frame concepts of virtualization and Virtual machine software methods platforms from 1960's and 1970's. This is not innovation but a return to a computer resource management processes first deployed in the 1960's..

Fourth, the large increase in the segments of applications being acquired by the major software vendors is creating software stacks and interoperability challenges for companies to implement and manage on their compute platforms. When multiple software segments combined with the number of acquisitions occur, the resulting software stack processes and management have become complex, expensive, and entail high technical risk when moving to new versions of software. This impacts the data structures and management

Fifth, the complexity increase of the software stack for a compute platform has also increased the complexity of the data management tools. Technical knowledge, experience and education has led to companies outsourcing implementation to reduce the technical risks and costs of large implementations. For the Fortune 500 companies a large ERP upgrade can take several years to roll out and test prior to full conversion and production. The second level issue with the data software tools is their design point is a parameter base where individual elements can change between new release of software. This means existing data processes may be required to be redone in order to make them compatible with the new data processes.

Sixth, Data's growth is accelerating due to the emergence of intelligent mobile appliances has been projected to grow 20 to 25 times its current size in the next five years or less. The growth in the user base, with the same base computer skills sets as described above, means the data management complexity is increasing as well.

Seventh, there has been software trend during the past 10 years to move execution of requirements from the data level to the software application stack levels by the vendors. Their purpose is to make replacement by competing software firms more expensive and difficult. The direct processing of data by software trend is to eliminate the capability to have subject matter expert or business users have direct access to data.

Eighth, access to data and application systems by end users has been channeled to either data available via data marts or report generator platforms. And also to specific query capabilities that are defined by the IT group processes. Trend promotes the use of spreadsheet or simple database software to collect and process the data needed by a user on their own PC based computer platform.

Realities of data management and processes include the following problems:
- There is no single version of data truth. Time latency prevents that from being achievable at an economic cost.
- The skill sets of users remains static even when intelligent mobile appliances are considered. There is a Gap between the user and the software stack resulting in less use of the data and less effective users in their jobs.
- Mobile appliances confirm that simple access to data and simple applications are a key technical productivity.
- Data ROI is with using the data not securing or managing
- New application platforms have limited amounts of access to data in Software as a Service (SaaS) working within the Cloud Computing platform strategy. Whether this proves to be user and cost effective is in process of evaluation at this time.

Relatedly, small and medium companies compete in a global economy working with the supply chain structures of other companies, their products, and services. Running an effective, competitive small to medium business organization requires operational data from internal and external sources constantly moving between business, financial and operational end users that are not be part of IT centric data and application operations priorities. Still further, Operational data that is evaluated and analyzed independent of standard business processes to create potential solution options preceding a product or service solutions being developed. The final requirement is providing a Level One data management structure at the end user skill set where data security, process efficiency and integrity from IT , machine and intelligent device data sources is provided without requirement for an extensive data management structure.

The problem in the business and government environment is how to obtain cost effective Audit Software designed for end users, auditors that supports integrated audit processes across a range of disparate vendor data and application software.

The addition of numerous data and application layers, integration processes for vendors' incompatible software acquisitions has led to a user having limited to no direct data source access with three exceptions. First, access to extracted data from original data sources via a database or record structure of a data warehouse or data mart. This is a version of one or more database tables organized as an intermediate data source for users. Second, access via an application device or method of a report generator design that enables trained end users to access and assemble a limited amount of data that is a form of a data mart or warehouse. Third, as an application data user as permitted by IT within the specific assigned responsibilities and access authority. This is for direct data access within the security authorized data records, field segments or components.

User access of direct sources within the compute environment has technical inhibitors to using key based or possibly delimiter based data files. The scope of data sources and software used to support those data sources, methods, and uses of data require complex, parameter based software and GUI's.

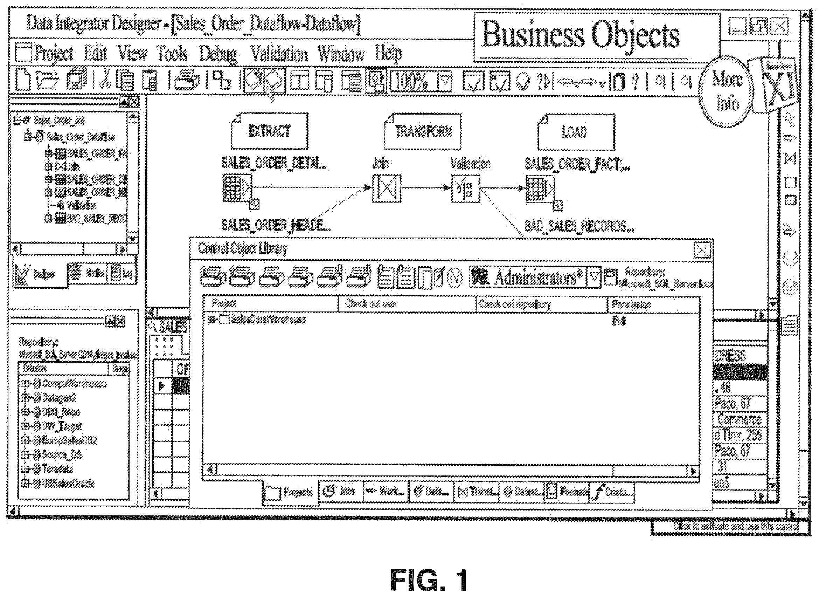

The first level of technical inhibitor is the complex GUI and software design point initiated in the 1980's and continues to this filing as the base GUI design illustrated in FIG. 1. The base design is a parameter-icon initiated command based GUI and processes supported mainframe, server and personal compute platform designs. It is the default vendor design point standard for business and data software interfaces across the software industry. The parameters can be modified with new versions and new parameter icons added. It is in a constant update mode of function for both data and application compute programs that are not conducive for user's who do not focus on technology as a primary work priority. It is not being a simple or consistent design for any user to learn or utilize. Technology is viewed as another tool in assisting someone in performing their job responsibilities.

The structure's software, GUI and their processes and methods have, in addition to parameter based command function, file folders, pop up screens, and flow chart components. This form of software and GUI design is found in applications, midlevel infrastructure software, Extract-Transform-Load (ETL) software, etc. There is no indication software vendors are changing the methods and processes.

Even the introduction of intelligent mobile appliance applications has not modified this design. There are already several hundred thousand application icons for mobile platform. Again the user is overwhelmed with function options complexity versus having an efficient set of process and methods for work with data sources with these applications.

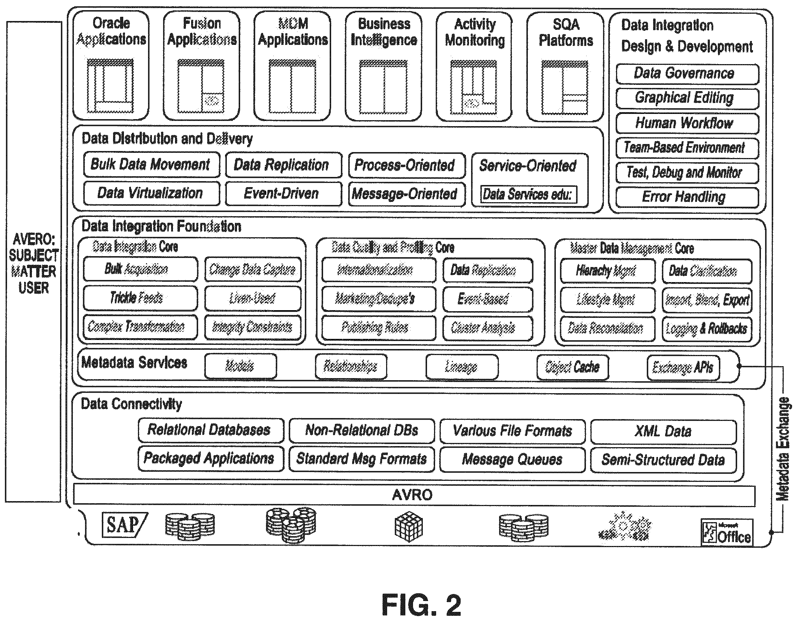

Second, there is a limit of change of design aspects is due to the vendors and customers' significant financial investment, staff training, the existing implemented processes and methods being supported. The cost of transition is difficult to financially justify in upgrades or replacement of the current data and application software. This form of complexity prevents customers from changing their compute software platforms in what the industry defines as a "wide moat" retention strategy FIG. 2.

Third, it limits end user participation beyond a very select basis due training cost, rate of software changes and the lack of a sufficient Return on Investment of user access to direct or intermediate data sources.

The impact to not have direct source data access is vendor strategy of placing data methods and processes into the application stack of their software. The standard process trend is to have "data integration" methods be managed by a software design that includes data management and use function such as ETL, Master Data Management (MDM), data quality, data security, etc.. FIG. 2 shows a vendor software platform stack diagram of data management and application software component elements.

In addition to the vendor software stack issue, further aspects of the invention also deal with the horizontal design, processes and methods complexity. This is due to the number of software components within the data and information technology segment that is provided by a series of software vendors. There are many data and information level components in current software options that further reduce user value due to the horizontal connectivity between incompatible data found in database software, data management processes and how data is permitted by a vendor to be moved between incompatible record structures.

The number of software components now involved in an organization's data and application infrastructure prevents end users simple access to the data they require for their job responsibilities.

The user is further limited in what direct data sources can be accessed, even if the data structures are located in a data store and forward schema with data marts and data warehouse structures. Movement and use of data is being inhibited because of the vendor wide moat strategy, the new data structures being introduced that are incompatible record formats and their storage management processes. There are limited and technical complex methods to moving data between vendor data record structures but not oriented to end user skills or source data requirements.

A study entitled "The Information Oriented Architecture: 2011" outlines the complexity created by the software industry definition and designs for the management and use of data and information. The level of vertical and horizontal components and design complexity is further impacted by the issue of what is data and what is information.

To assist comprehension of the various aspects of the invention, a simplified understanding of the difference between data and information will be described. The incorrect general belief is data and information is interchangeable terms and file structures. They are not. And since they have different definitions and purpose, the software design and methods for inventions for each are different. Data is not information. Data records and files are the basis for information being derived, processed or analyzed. Data is the base input for applications methods processing data for business and other record purposes to produce information. There are three components in moving from a data record to knowledge:
a. Data: consists of two elements of patterns and trends. These patterns and trends are the records and files used in the data-information-knowledge process.
b. Information: is an assessment of patterns and trends by software or individuals producing actionable decisions and business results.
c. Knowledge: The business results translated into decisions and results form the analysis and processes of evaluation of the information.

A base of the major components industry analysts and vendors have determine represents the technology backbone for an organization. This includes Application development, Middleware, Business Intelligence Applications, Data and Data Management for various data structures from multi-dimension data tables for business intelligence software to relational databases, columnar database structures and unstructured records such as document content. There are a number of vendor sponsors to the drawing and this does not include all the elements of the stack such as that shown in FIG. 2. In the prior art there is no horizontal or vertical data source connectivity with end users outside of the Business Intelligence sub-section. This is the issue with the current multi-vendor, multi-component configuration; it is not designed with process or methods to enable an individual user to leverage the existing data sources in a simple, efficient invention supporting both the vertical and horizontal aspects of technology architecture for an organization or global enterprise.

Of further note is the prior art's underlying incorrect assumption of data record structure singularity made in vendor or analyst drawings, software design, etc of the drawing being centric to a single or select group of vendors. This is not the real software profiles found in any organization when examining from the enterprise level to the individual desktop compute platform. There is normally little to no single description of the data record formats and structures that are found internal or external to the organization or supply chain vendor-customer IT systems. The global supply chain model has further exacerbated the vertical and horizontal complexities found in a user having the technical capability and resources to direct source data tables and files access.

The second issue in prior art approaches is the vendor complexity has created a vendor structured data silo architecture where the application design is to control the data sources being utilized and making a dissemination of data to other uses is very difficult. The factor of latency and time stamp management of a data record, updates or modifications made to a record must be kept, per vendors, in a "single version of the truth" in order to maintain data quality and consistency. Time stamp management for sub-components of data and software is a data efficiency benefit. However, on a large scale data source basis, cross enterprise systems are inconsistent in achieving even a sub-component consistency. And consideration of one off individual projects makes this form of data record management unrealistic given limited budgets and IT resource availability.

All of these factors are creating vendor data silos where restricted or controlled access is a design point. And since there are few single vendor production environments the result of having multiple data management environments is the creation of multiple, incompatible data structure silos.

These and other technical and vendor issues need to be solved in order for direct source data files, tables and spreadsheet structures in order to support the individual user or group of users in a simple efficient, effective base methods and processes.

However the reality is, no one truly knows the full extent of where users obtain or create their data sources, how they are used and what the level of data security, back-up, archiving, etc. are performed; and is why this is defined as ungoverned data at the organization/enterprise. What is known is this is a significant technical data management and processes issue. Second, when system change, the hardware and applications are replaced but the data is ported to the new systems. Data is where the value proposition is the user and their organization.

### SUMMARY OF THE INVENTION

According to certain aspects, the invention provides advanced software architected to leverage the operational data volumes from IT, intelligent devices and machines supported and maintained by IT, or end users, for use by business groups or individuals. According to certain aspects, the invention provides a low Total Cost of Acquisition (TCA) to implement and a low Total Cost of Operation (TCO) set of processes that enable data sources to be transferred, modified, and computations performed based on the needs of the end users operating independently or within the enterprise's data assets. This makes it possible to cost effectively capture any data source and place within the enterprise' standard data structures and processes. According to another aspect, the invention provides the end user options with capability to re-structure, copy, and re-position data for corporate and end users for ongoing corporate applications via a selection of options methodology that is supported by usage of the end user versions of spreadsheet software. The purpose is to reduce or eliminate conventional programming or parameter requirements needed in current software solutions to work with data from incompatible sources. One advantage is that the invention can significantly reduce the cost from using and re-formatting these numerous, rapidly growing, incompatible volumes of operational data and information. In one implementation, the invention achieves this with a solution supporting the end user's data criteria without being impacted by IT complexity, security and data risk issues.

In certain embodiments the invention enables the user to review existing database tables within the invention. This is defined as Rapid Data Prototyping where data is quickly assessed prior to copy and use, thereby reducing acquisition analysis and time of the data sources. The spreadsheet's methods and processes are utilized in the user's compute processes.

Another aspect of the invention is the data integration support of a company's internal, external, and regulatory audit data requirements (Audit Integration). The invention deals with the complex, high risk audit data and data protection environments found in any small and medium size company where IT skill sets are scarce. The invention includes resource programs with both technical and accounting skills. These resources work with software and a company's internal audit resources to support the audit integration requirements at their IT, audit and business skill sets.

Embodiments of the invention are designed to contain and reduce the impact of the data challenges associated with business requirements where there is little to no IT support available versus the requirements to access and utilize incompatible data sources requirements. The invention assists end users in directly positioning, creating, focused replication, structuring and delivering data to multiple end users while meeting the organization's financial management objective for in department cost effective support of the company's business requirements. Embodiments can assist users in evaluation and planning to integrate disparate data sources for use within the enterprise or reposition for external business partners requirements.

Furthermore, certain embodiments of the present invention provides the user's direct data access in a set of point and click commands to reduce or eliminate programming or parameter based command aspects. The system is comprised of a Data Process Engine, operations data library, rejects/repair methods and processes, and a stats/metrics subsystem with capability to track the data access and usage volumes by the user. The system and its components directly support and are utilized by the user. The methods and processes create data applications enabling the user to move data from a flat file to a database table to spreadsheet file and back to a other data file formats. It also permits database tables to be accessed and loaded, copied and processed through spreadsheets; all by point and click processes. The rapid data structure changes provide a data liquidity process and method according to aspects of the invention.

Certain aspects of the invention design enables data from incompatible sources to merge into a file or table. Working with spreadsheet software, at the user skill sets, the invention allows users to perform compute functions and some levels of Extract, Transform, and Load (ETL) functions. Furthermore, the design has specific limits to the processes and methods the user is permitted in order to maintain data quality, integrity and consistency.

Certain embodiments of the present invention comprise systems and methods for providing data processing without programming or parameter GUI interface design. There are no user parameter processes. Further embodiments consist of a parallel set of systems for tracking Statistics/Metrics, and reject processing.

In certain aspects of the invention, the IT data management team is provided with the capability to obtain copies of ungoverned data and apply data management processes and methods to data. This includes accessing and retrieving data sources residing in personal computers or independent department servers, and doing so at a low Total Cost of Acquisition (TCA).

In accordance with these and other aspects, a method of processing and managing data in an open platform data system through a computer user interface that accesses one or more data sources, according to embodiments of the invention comprises: providing a data process engine through the computer user interface that enables users to access and perform IT level data processes with the one or more data sources; providing a point and click command process for data access, process and management by users through the computer user interface; and providing an automated data liquidity process to transform and translate the one or more data sources between a plurality of database and file formats and into a working table, wherein users can copy specified rows and/or columns of the working table to a spreadsheet for ETL processes and actions.

### BRIEF DESCRIPTION OF THE DRAWINGS

These and other aspects and features of the present invention will become apparent to those ordinarily skilled in the art upon review of the following description of specific embodiments of the invention in conjunction with the accompanying figures, wherein:
FIGs. 1 and 2 illustrate the complexity of prior art data management approaches;
FIG. 3 is a block diagram illustrating general aspects of the invention;
FIG. 4 is a block diagram illustrating example computing platforms for implementing embodiments of the invention;
FIG. 5 is a block diagram illustrating aspects of data processing according to embodiments of the invention;
FIG. 6 is a screenshot illustrating an example implementation of a data upload process according to embodiments of the invention;
FIG. 7 is a screenshot illustrating an example implementation of a data processing process according to embodiments of the invention;
FIG. 8 is a screenshot illustrating an example implementation of a file uploading process according to embodiments of the invention;
FIG. 9 is a screenshot illustrating an example implementation of a data search or filter sub-process according to embodiments of the invention;
FIG. 10 is a screenshot illustrating an example implementation of a data parsing sub-process according to embodiments of the invention;
FIG. 11 is a screenshot illustrating an example implementation of a column splitting sub-process according to embodiments of the invention;
FIG. 12 is a flowchart illustrating an example append process according to embodiments of the invention;
FIG. 13 is a screenshot illustrating an example implementation of a clipboard function according to embodiments of the invention;
   is a screenshot illustrating an example implementation of accessing various data processing activities according to embodiments of the invention;
FIG. 14 is a flowchart illustrating an example implementation of an undo append process according to embodiments of the invention;
FIG. 15 is a screenshot illustrating an example implementation of an undo append process according to embodiments of the invention;
FIG. 16 is a screenshot illustrating an example implementation of a direct database access process according to embodiments of the invention;
FIG. 17 is a screenshot and flow diagram illustrating an example implementation of database modification process according to embodiments of the invention;
FIG. 18 is a flowchart illustrating an example rejects process according to embodiments of the invention;
FIG. 19 is a screenshot illustrating an example implementation of a rejects process according to embodiments of the invention;
FIG. 20 is a flow diagram further illustrating example rejects processing according to embodiments of the invention;
FIG. 21 is a screenshot illustrating an example implementation of a statistics / metrics process according to embodiments of the invention;
FIG. 22 is a screenshot further illustrating an example implementation of statistics! metrics process according to embodiments of the invention; and
FIG. 23 is a flow diagram further illustrating an example implementation of a statistics / metrics process according to embodiments of the invention;.

### DETAILED DESCRIPTION OF THE PREFERRED EMBODIMENTS

The present invention will now be described in detail with reference to the drawings, which are provided as illustrative examples of the invention so as to enable those skilled in the art to practice the invention. Notably, the figures and examples below are not meant to limit the scope of the present invention to a single embodiment, but other embodiments are possible by way of interchange of some or all of the described or illustrated elements. Moreover, where certain elements of the present invention can be partially or fully implemented using known components, only those portions of such known components that are necessary for an understanding of the present invention will be described, and detailed descriptions of other portions of such known components will be omitted so as not to obscure the invention. Embodiments described as being implemented in software should not be limited thereto, but can include embodiments implemented in hardware, or combinations of software and hardware, and vice-versa, as will be apparent to those skilled in the art, unless otherwise specified herein. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

According to general aspects, the invention includes a data processing engine 300 that allows a user to input organizational data 302 in formats such as a spreadsheet format translated to a CSV format 304, a CSV format 306, a TSV format 308 or a database record format 310. The user is then allowed to work on the data (e.g. edit, copy, etc.) in a working version format 316 that the user is comfortable with, and then save the data 320 in any organizational format. The user also has two support systems working with the data processing engine 300. The first is the Rejects system312 to capture data not meeting the record specifications and to enable possible repair. The second is the Stats/Metrics system 314 captures metrics on all actions processed on data sources and tables by the user.

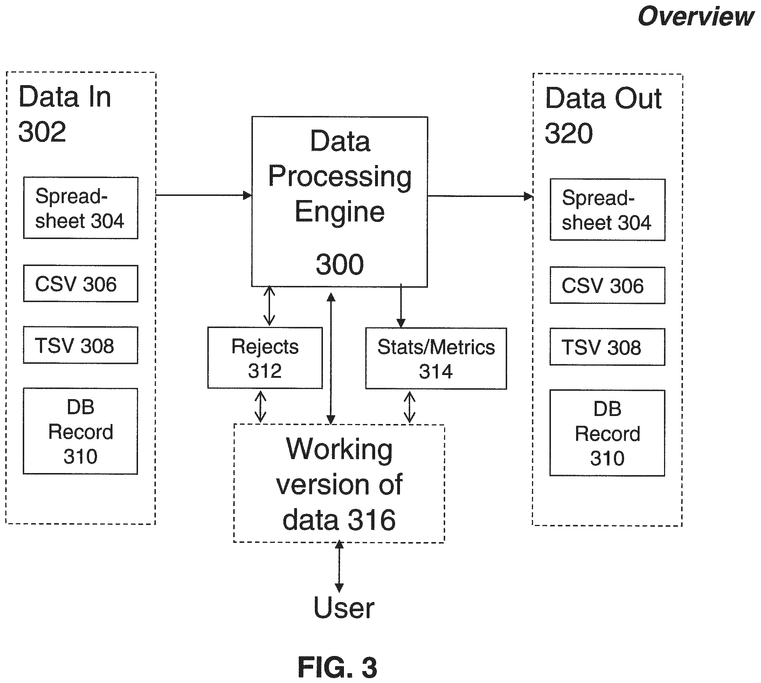

For purposes of simplifying this description, the data portrayed in the various drawings such as FIG. 3 may be construed as being record-oriented and it may be assumed that each record can have the same structure: that is, it can have the same fields. However it is contemplated that, in certain embodiments, the records may have only a small common set of fields, with the remaining fields being specific or customized for each record. In the latter case, the sorting and grouping of the records will be described as acting on fields common to the records involved.

In certain embodiments, the record may have a financial structure and be derived from a cell formula process used in an office suite spreadsheet form of software. In this instance, the cell formula for modification, calculation or processing the data field is not transferred when a spreadsheet file or worksheet file is converted to a flat file format for purpose of moving the record to a new data record format. One example of this file process is moving from a spreadsheet file structure to a Commas Separator Value (CSV) or Tab Separator Value (TSV). This format permits a spreadsheet worksheet or file to be moved via the invention into a database record format.

For purposes of a framework for the invention, the data 302, 320 format can be a key based record, spreadsheets key based forms, database structure records, Comma Separated Value (CSV) and Tab Separated Value (TSV) having a zero row header file containing the description header for that data field. The invention also supports CSV or TSV files having no zero row header record in the record but only the data fields themselves. Used interchangeably in the description of the invention for CSV and TSV files is the industry term for this form of structure called flat files.

For purposes of a framework for the invention and based on surveys, the end user portrayed relies upon spreadsheet software for their primary data record form and data processing methods and management on their compute platform. This profile is based on several surveys of the skill set profile for an end user and the software they use in the course of the job responsibilities. These surveys further indicate the average user skill set represents 96% to 98% of the entire computer platform user population. Accordingly, embodiments of the invention provide the working version 316 in a spreadsheet format.

For purposes of simplifying this description, the user is an end user, business user or subject matter expert user. There is also the option for IT technical users to work with this invention as well. Based upon surveys, a user's individual data use and processes primary data processing option is a form of spreadsheet software.

For purposes of simplifying this description, reasons and trends why the spreadsheet form of data process and management is the primary method for a user in their work related data requirements include:
a. Users have data process, data quality and analysis requirements that are not cost justified in order to be supported by the organization IT resources. The Return on Investment (ROI) is insufficient.
b. The conventional IT methods and processes cannot respond in a timely manner to the update data restructure requirements even when justified. Complex software stack configurations have limited flexibility to changes of user. Furthermore, users have difficulty in remaining up to date in software version changes.
c. Unpredictablity: A user's data requirements change constantly due to new job needs for processes, analysis and decision making. The criteria for assembly and organization of data fields, records also are constantly changing. Many times there is no predictability on what will be the next set of requirements to support.
d. The IT based transformation and data processes and methods such as Extract-Transform and Load (ETL), Extract Load and Transform (ELT) or Extract, Compute and Process (ECP) are too complex for users to use or provide their own technical support.
e. Compute platform invention trends such as intelligent mobile appliances are driving increased data use because of expansion of the population using the devices. Combined with the requirements of new record structures being designed to support these compute platforms.
f. Data management (managing, security access, back up, data quality, etc.) and process requirements are overwhelming IT budgets and resources. Further impacted by the software stack for data management is trending to be more complex, with more elements.
g. Reduced data source access is caused by large software vendors integrating their application and data software components into a single software stack. Thereby increasing the complexity and costs for deployment and support of the data methods and processes used by end users. Data sources management is moving toward vendor silo design where all data is subordinate to the application components and direct data source access is reduced. An example is ETL software process and methods are becoming a component of Business Intelligence software. That the application software becomes the driver for data sources use by placement of traditional data processes and methods inside the application design. This is defined by analysts as a "wide moat strategy" customer account control; and further removes users from having direct access to data record and file sources.
h. One of the outcomes of the complexity, inflexible data and application systems priority is business organizations, their management and users are assuming more direct financial and resource investment in data records creation, management and process methods for what they require to perform their job responsibilities. However, the migration of responsibility to the user community has not solved the complex data source access and use issues because, in part, software has not adapted to the user requirements and skills sets. It is one reason why intelligent mobile appliances are gaining acceptance with the user.
i. Direct data record source access is subject to complex IT data security and management processes. The processes reduce the end user's direct data accessibility due to cost, complexity of software and the lack of sufficient technical skills to utilize IT level data process and methods.
j. A Technical User Skills Gap has emerged where the complex skills needed to use the major vendor's software exceeds the average software skill sets of the user. The User's base skill are remain relatively constant versus the vendor data and application software designs, methods and processes getting more components and more layers in the software stack.

According to certain aspects of the invention, a design point of a tool implementing embodiments of the invention is based upon the average computer skills and knowledge profile of business users, subject matter expert users. The invention and to a lesser degree IT skill based users. The user computer skills profile consists of:
a. Experience with office suite software. Utilize approximately 20% to 30% of the function available in spreadsheet software for most of their work. The emphasis is the use of spreadsheet software function in processing data structures within the software design.
b. Have the capability to download software from the Internet and load shrink wrap based software from a storage device.
c. User's experience and ability to conduct searches on the Internet
d. Users experience and ability to use email communications including sending of various forms of data as attachments to email.
e. Some limited or no knowledge, training, experience or access with complex process software such as ERP, Business Intelligence, ETL, middleware infrastructure software, database software and data management methods and processes.

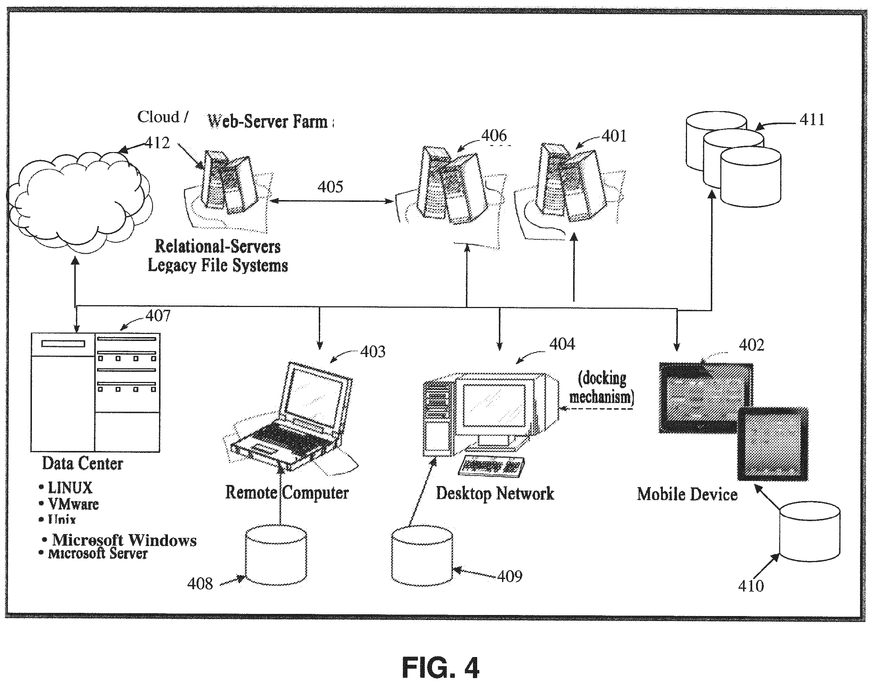

Certain aspects of the invention can be embodied as an open compute platform as generally depicted in FIG. 4. There are a number of computing devices the invention can reside on and execute its processes and methods. As shown in FIG. 4, embodiments of the invention can be implemented using a number of computing platforms and devices including laptops 403, desktop pc 404, servers 401, 405, 406, data center compute platforms 407 remote pc support and support intelligent mobile appliances / devices 402 of intelligent mobile phones and tablets 402. Operations in the cloud 412 are dependent on the compute platform the software resides on as to utilizing remote pc connections or whether the cloud services are being utilized only for the data storage capacity role. The data being accessed and tables created can reside anywhere in the organization's data storage locations. The access authority may be required when data is not resident on the same compute platform as the platform implementing aspects of the invention.

In embodiments, source data access is not restricted to a single platform having master control. Rather, each user preferably can access data sources per their security profile. The invention allows individual users to pull data sources for their projects into forms they can work with. An exception to this can be when data sources are resident on a pc compute platform that may not be connected to the organizations IT infrastructure.

In certain embodiments of the invention, the processes and methods do not have the primary role of being the data and application basis for an organization but to provide a data use and integration for projects not having a ROI that justifies the traditional investment of programming, data file / table design and implementation. The design has capabilities to be used in production scenarios but the focus is on individual user requirements or that of small groups without any significant direct IT resource support.

In certain embodiments of the invention, data sources are intended to be copied by the user on their compute platform and the user's work processes will transform, edit and use the data for their work requirement. If the modified data is required to be in the organization's data repositories the user and IT group need a standard plan process for data file naming conventions, storage devices and their location plus users with permitted access.

In the embodiment of the invention, the system design is to provide a cost effective method for IT data management to capture data not currently in the system. It is providing compute and data platform resource to the user to utilize those resources while those users enable the capture of data. In essence a barter agreement arrangement between IT and users.

In certain embodiments of the invention, the criteria for the invention residing on a compute platform are based upon the technical capacities of that platform. If the compute platform has the minimum processor memory and compute engine, with sufficient storage to retain the invention software said device can support the processes and methods.

The above described examples are provided for illustration only and have been simplified to assist comprehension of the operation of certain embodiments of the invention. However, the invention is not limited to the configuration of elements described above or shown in the referenced figures. For example, certain embodiments of the invention comprise a client that may be implemented using a remote pc software configuration residing on a server. Moreover, other computers may participate in the use of the data being translated along with its computations based on security access as defined by the IT data management group. Additionally, the network of remote compute platforms may comprise their own copies of the invention software and execute its methods and processes independently of other personal computers, servers, etc. shown in FIG 4.

For example, in certain embodiments of the invention, the operating system is a Windows and Server system. In certain embodiments, the invention can be extended to other operating systems. There is no impact to functionality or invention: the function processes and methods remain the same, as will be appreciated by those skill in the art.

The design of the invention also includes the consideration of the complex software data and applications trend and direction being developed by software vendors. The emergence of newer compute platforms are included in the invention design presented in this application that diverges from the business, expert subject matter software skills sets. The focus upon Data Processing and Data Application design and methods of this embodiment is independent of hardware platform, operating system and vendor application software or data software tools such as ETL, Master Data Management, etc.

Storage of the source data files, copies of the source data files or the target files and tables created by the invention in 408, 409, 410 can be internal or external to the organization including third party systems such as supply chains, third party compute 407, and data storage centers, cloud compute services 412, etc.. This can also include network based storage or internet downloads 411. The direct access to data can be determined by the security and access options permitted under the data management system and methods that the user is permitted access to work with. The invention has the same processes and methods whether the user identifies the records as being data or information. The processes and methods look at the content structure to determine the inventions ability to support.

In embodiments, the compute device does not require storage of the data on the device as long as it has authorized access to the data internal or external to the unit, organization or enterprise. The compute device is where the software can be resident or in a personal compute device the software can be accessed remotely through data connect software.

The independence from a hardware and software platform beyond interface requirements is a design point of the invention. This includes the ability to work with data and the structures required to be utilized in an application or vendor application stack containing software such as Data warehouses, Business Intelligence (B.I,), Customer relationship Management (CRM) Enterprise Resource Planning (ERP), Software as a Service (SaaS) etc. The data format, data structure types (alpha, alpha-numeric, fixed length, floating point, double floating point, etc.) in the data management and processes environment do not contain application attributes required by an application software in order to execute successfully the application functions.

In embodiments, the invention can be part of a multi-level data software design point based upon where data and data processing is proceeding, and further based on the compute platform and software function supported. Data integration is a subset of the original software position of the technology field where the processing of data and the data structures constituted the design and methods reference for decades. The invention provides data integration and uses for sources of data. The technical structure of data needs to be reformatted in order to support a multitude of computer platforms and users.

Certain aspects of the invention can be embodied in a design that does not require the traditional complex data and applications stacks by having compute processing done at the data level with simple application concepts. It is done with the data structures of database tables, flat files with and without header records, and spread sheet worksheets.

An embodiment of this invention has the technical capability to work as part of this key based and header based data strategy in a multi level data application design, method and process The following levels of capabilities can be implemented via a vertical and horizontal design for data integration and processes: Level 1- End User Interface - Subject Matter User; Level 2 - Standard Interface - Analyst & Architect; Level - 4 - Graphical Interface - IT Data Management Team Analyst and Architect Users; and Master Administration Level-Graphical Interface Technology for Administration Staff.

In certain embodiments, the point of integration is not at the application level but at the data level. The key based files, tables and records are found outside the application programs. The current definition for the technology industry is Information Technology (IT), with the emphasis being on information use, creation and management. However, the industry's incompatible application designs are the primary interface between data sources, so whether they are compatible or incompatible is a root issue on how the current iteration of vendor data and application silos has emerged with limited ability to move data from one vendor design to another. The base processes are incompatible designs in terms of how data is stored, processed and managed. The application has become the centric point of vendor designed software compute inventions. The design, methods and processes are an application design that arranges data sources and record structures to a single optimization of data record organization support to an application.

In most embodiments of application and data integration currently, the Business Intelligence (BI) software design includes ETL function, processes and methods in its design. This has the BI application design as the base data integration vehicle. IT decreases data integration to what is needed for application software versus what the technology industry has done since the 1960's with it being defined as a Data Processing.

In certain embodiments of the invention, data integration includes methods and processes used to transform, compute, transfer and store data below the application level of software yet utilize aspects of application methods and processes within the data management processes and methods. A design defining data integration as the software used to process data without the support or use of conventional vendor-produced application software. Many data processes have been uplifted into the application process and methods creating a second level of incompatibility (data level, application). The invention is designed to bring base application function, processes and methods to the data. The data integration design uses an open platform and is vendor neutral. This is the basis of how other software, such as the software described in co-pending U.S. Appln. No. 12/267,815, the contents of which are incorporated by reference herein, can work with the invention because the point of integration is the data structure itself and how each of these software designs performs very different inventions of data integration and data applications because it is efficient, simple and leverages the existing technical skills profiles from end users to data base administrators without creating a new layer of software complexity.

It is contemplated that, in certain embodiments, the base criteria for the invention is that data is the high value asset for any organization or enterprise. That data is typically more important than any application because of the experience when computing software and/or platforms are improved, the data is ported or transformed to the new operating environment in compatible data structures. The prior compute platform technology and/or applications are replaced. Data processing and integration is focused upon structured data including key based records, CSV and TSV flat files (including systems level performance data), spreadsheets, and metadata records managing unstructured data.

Certain aspects of the invention can be embodied as a software system, not as a data software module set of processes and methods. One design focus is support of end users, at their current skills sets in their direct access and use of multiple data source record structures without currently having or requiring the technical knowledge or skills for processing data structures. Furthermore, user does not need to know the vendor software that supports the existing data structure nor the version level of that vendor's data software. The invention is an open- platform (vendor neutral) system. In certain embodiments of the invention it utilizes the spreadsheet skills of the user in their work with the invention's processes and methods. The base invention is designed as a system to execute transforms, data processes; re-organization of copies of data sources is via spreadsheet software. Having the user doing so on a rapid basis without programming elements is an aspect, allowing them to be done instead via a point and click set of processes.

Certain aspects of the invention can be embodied in the design criterion that process and methods are preferably simple to execute, efficient, require no programming expertise, and utilize the existing data security, access and management software in place. Furthermore, the invention does not impact the applications and other data processes within the organizations compute environment. In certain embodiments the invention recognizes as a user design criterion that spreadsheet software is the market default form of data record processing and data records software employed by users. The present inventor recognizes that spreadsheet software is the center point of a user's skill in working and performing processes with structured data. Therefore, the invention includes the spreadsheet software as an object component providing the base level Extract, Transform and Load (ETL or ELT) function, processes and methods. The spreadsheet software is the only external data software that works with embodiments of the invention. The design point of the software is to work within the user's software skills and not impose layers of software function, methods and processes as done with other vendor's software stack design and complexity.

For the purpose of simplifying this description, the spreadsheet software portrayed in the drawings and explanation is Microsoft EXCEL. However, the invention is not limited to the configuration of elements described above or shown in the referenced figures. For example. Certain embodiments of the invention comprise a spreadsheet from another vendor and are equally applicable because of the common design and function structure of this form of software.

The technical attributes of the invention are:
a. Speed: Rapid movement of data structure from source 302 to target 320 in one or several iterations. Data can be moved from flat file to database A to spreadsheet back to flat file and then transfer to database B structure via point an click with no technical knowledge of the database or flat file beyond standard information.
b. Data: systemization capture from pc based data and spreadsheets for the entire organization.
c. Metrics: is a component of the invention's system level design, as will be described in more detail below. A process action record is made for each action and process is recorded through a series of metrics captured by the invention.
d. Rejects: is a component of the invention's system level design, as will be described in more detail below. It is the capability to capture records not fitting the record structure of the flat file moving to a database structure. Provides the option to assess and repair this data by the user.

In certain embodiments the computer platform software systems with which the invention interfaces do not have knowledge this is a system level software set of processes and methods; only that the user is authorized to access the data sources in the security system. It has the same access options as a conventional application in that access can be detailed to field level authorization as well as record.

The preferred use of direct source data access is to copy the source data 302 and then perform the processes and methods required via a data application method on a copy of the data in working version 316; and storing the target results into the file and record structure needed by the user 320. Data quality and integrity are part of the data operations processes to use with the invention. It is recognized users need data for many one off projects that do not require the resultant data to be placed back into the enterprise level data sources. The invention provides the option for processed data to be placed back into the main data storage systems if appropriate.

A data application is a method and processes that leverages concepts of application functionality but is executed within the data processes in order to simplify the user's working with data sources. It is designed for execution of transformations and compute based application processes done within the invention design. It does not require other application software but only a data source 302, a target data file or table 320 where the results of process, translations and calculations performed within the invention using working version 316 are placed post the execution. The data application process is designed and executed by the user; and involves using their existing software skills; in this case, the knowledge and use of spreadsheet software function. The invention further supplements the data application processes through support function within the invention software but within specific process limits in order to preserve data integrity and data quality.

In certain embodiments, objectives of the invention include:
a. Direct access to data sources for end users as requirements dictate within the organization or third party sources usually kept in personal compute platforms or third party options.
b. Capacity for transformation and data compute methods, processes via point and click with minimal to no program or parameter processes.
c. Utilizing a simple, repeatable and efficient set of compute process through data application processes and methods. Performing application functions at the data level within the record structure, fields and record organization environment using existing user software and software skills.
d. Cost effective means for data to be captured into key based, header files, database tables and spreadsheets with current IT resources
e. Support and execute the primary data processing and record changes and updates are performed with the user's current process software - spreadsheet software.
f. Having key functions and processes of a system level design including reject capture and repair process options. Also having system metrics and information capture regarding the data operations performed for tracking and analysis purposes

In certain embodiments, a personal computer 403, 404 may be used to access a CSV or TSV structured file. For purposes of simplifying this description, the data portrayed in the examples includes a Tab Separated File (TSV) or flat file. It may be assumed the file has a zero row header record that labels what each field in the TSV file is and how the specific column name will be identified when translated into a database table. The processes are the same for a Comma Separated Value (CSV).

Furthermore, for purposes of simplifying this description, the database software being used is an Oracle database software license form known as an Oracle Express database code. This form of license has all the function of a free Oracle license but is restricted in its data storage capacity management and compute memory use capacity.

In certain embodiments, the user after security and user ID sign in process is complete will access a data source 302. The data sources a user can access is determined by the location of data. The data source can reside in the user's or department personal compute platform. Access is then by the user's pc sign on process. If the data source is located within the enterprise, the user must have access permission from an IT person that is the data base administrator or someone in that role.

Typically, data held by the user has been assembled, created or loaded from multiple sources both internal and external to the organization. The data is normally not part of the enterprise data management and storage processes. The IT group does not know what user all data is maintained or developed in a user's pc or department systems that are independent of IT management. Furthermore there is no cost efficient means to capture pc based data in the primary structure of spreadsheet worksheets. This form of data structure is not transferable between vendors without the spreadsheet being converted by a save command in the spreadsheet software into a CSV flat file.

The data format structures in the creation and control of users include spreadsheet files or unstructured data such as word based documents, presentation software, email, etc. Data that is not key-based or CSV/TSV is defined as unstructured data. Embodiments of the invention are not designed to support unstructured data. It will support the accompanying metadata tables if present in a database or structure file format that supports the unstructured data files.

In embodiments, if the file being processed is initially a spreadsheet worksheet file, the user first converts the spreadsheet to a CSV format or flat file before using the invention's data processes and methods.

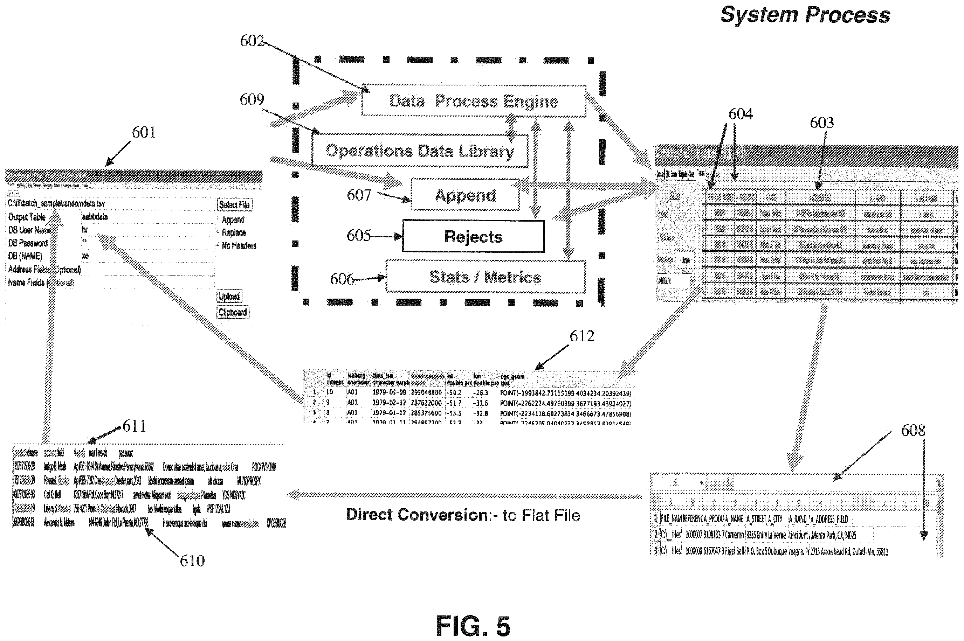

A block diagram illustrating example implementation aspects of embodiments of the invention is shown in FIG. 5. As mentioned above, in certain embodiments of the invention, the ability to move data records amongst multiple file structures and vendor software without programming methods is defined in the invention as Data Liquidity. Data Liquidity is facilitated using the data process engine 602 and the support methods and processes 605, 606, 607 enable users with standard personal computer software skills to move, transform and modify data through a point and click method. For purposes of this description, the data is primarily in a record format with fields in database tables 612, flat file 611 or spreadsheet record formats 608. The methods and processes need a user to know the final data file format, data and field structures required for their work. The data can move from a flat file 611 to a database 612 to a spreadsheet file 608 then to a CSV version of a flat file and back to the same database vendor software or to another one without programming or other software being necessary.

In certain embodiments of the invention, the processes and methods do not have report generation functions or components, although the data for report generator software can be placed in the appropriate structure of records and field per the criteria to interface to reporting software. There are no standard applications that are a component of the software. Again, the data can be structured and positioned for the application to retrieve and utilize in their processes. The data applications are created and performed within the invention processes and methods. A user can work with their current reporting software to support their work requirements with no additional processes.

Furthermore, certain embodiments of the present invention may utilize the current compute and data function of conventional spreadsheet software. This software is the basis for editing the transformed file structures using data process engine 602, as illustrated in 603, 604. The records can have fields added or removed (spreadsheet cells). Field columns can be repositioned in the field sequence of the record within standard process parameters of spreadsheet software. Moving a spreadsheet file from a worksheet to a database structure requires the spreadsheet file to be converted to a CSV file structure using the second box on the Save File command processes. The default file structure is in spreadsheet format. When transforming a worksheet to a CSV file, per the spreadsheet software design, any cell formulas are removed from the resulting transform and the data points remain. Embodiments of the invention use conventional file and command options of the spreadsheet software. The software is unaware of the invention processes and methods using the spreadsheet code functions.

Certain embodiments of the invention comprise a computer platform where a personal computer platform 403, 404 among others contain software implementing data process engine 602. As mentioned above, the software can also reside on a remote compute platform - server via remote computer attach or using an intelligent mobile device. The invention can run on any Windows or Windows server platform from XP through Win7 and Server 2000 through Server 2008 R2. The support for additional operating systems is not a restriction with the invention In certain embodiments, and as generally depicted in FIG. 5, the database structures are not limited to the current commercial databases supported. The design for data structure types is an open platform and additional database types can be added. This design can also include files under the XML structure.

Certain aspects of the methods and processes utilize the commercial database vendors' methods and processes. There are criteria inherent in their design that in certain embodiments will utilize those criteria. Examples include the limitations on the number of field segments the vendor's database design permits - approximately 100 fields at this time. A second design point is database record length maximum is 4,000 bytes. A third vendor criteria is, as an example, Microsoft number of rows per EXCEL worksheet is different between Office 2003 (64,000 rows/ worksheet) and Office 2007, 2010 (1,000,000 rows/worksheet). Certain aspects of the invention can be embodied with interface and support of the vendor's designs. The design leverages the capacity and design points of data structures but must operate within that vendor's design points in order for the tables and files to be fully compatible with similar versions of that software.

The operating system and data management software and data files are only aware of a data request being made. There is no knowledge by the system of the embodiment's data process system or function. In certain embodiments the general systems of the organization are not aware of the invention presence nor its function processes and methods beyond having proper access and use authority as found in a conventional application.

In certain embodiments, it is not necessary that the user understands the data process engine 602 methods, nor the invention's use of API's; and the user is not required to manually construct commands in any programming language.

Per the lack of technology skills on the user's part, embodiments of the invention have several process results pop-up screens to convey detailed results information of the action. For example, when the Select tab is clicked by the user and the file converted to a data table, a pop-up screen displays the level of records successfully processed, rejects and other information of time of process, data table file created and end of process execution time.

The invention is preferably a self contained design, and a set of processes and methods for executing and support of the data processes at the skill sets of the average user tech profile. Typically, the user will be able to use as a data source files from a database, Flat files with and without a zero row header record and spreadsheet data via conversion to a flat file that is commonly a Comma Separated Value (CSV) record structure.

Certain embodiments of the invention have capability to directly access database tables per the security authorization. There may be system restrictions when doing such access, as will be explained in more detail below.

The above outline is provided for illustration only and has been simplified to assist comprehension of the operation of certain embodiments of the invention. However, the invention is not limited to the configuration and background elements described above or shown in the referenced figures. For example, certain embodiments of the invention can comprise an XML data record format that may be added to the file forms of key based data formats supported. Moreover, additional forms of database structures from other vendors may also be a base component of data structure being supported by the invention.

In certain embodiments, the invention does not require the user to have technical knowledge of the data storage software process, execution methods or the data structure rules for the data access and structure use. The users only requirement is to receive from the IT group their sign on process and data name sources if outside their pc. The only source file structure information a user is required to have is if the source 302 is a flat file that they know if there is a zero header record or a no header file structure in order to invoke the proper file delimiter processes of the invention. If the source data 302 is a database, the user needs to know the vendor database software vendor type being accessed in order to use the appropriated database tab in the invention for data table access and structure use. Those are managed by the invention. The user is required to know some fundamental data structure limits of 4K record length, having a primary key, spreadsheet works sheet row maximums depending on the version level and spreadsheet software vendor. An example is that database software has a limit of 4,000 bytes (4K) in total length for a data record and will support approximately 100 individual segments per record format. These are the profiles of vendor data software.

Embodiments of the invention maintain a permanent library of the data sources and targets created that is server or personal compute platform resident. The current organization or enterprise IT database software, spreadsheet folder and flat file folder management processes are the basis. The design is to maintain libraries outside of the existing data management processes to create security, back up, and roll off processes in an already complex environment.

According to certain aspects, the invention includes methods that permit users to create data applications within the function of the software and with other data oriented process software such as Extract, transform and load.

In general aspects, embodiments of the invention are designed for structured, key based data and flat files with delimiters that have either zero row header control record with field description separated by a comma or tab delimiter or no-zero row control header data structure sources. The invention also supports spreadsheet worksheets upon conversion to a comma separated flat file structure. According to surveys by the software industry, these types of data constitute approximately 15% to 20% of all data resources within an organization. The remaining data is unstructured data. The structured data's operating profile is a long cycle, high value to the organization because of supporting a company's operations. These forms of data have a data process management software support structure providing back up, recovery processes, archiving, and the capability to move the data from older to newer computer storage and computing platforms.

According to certain aspects, the invention is designed to bridge the Technology Gap between the compute platform's data processes and methods and the user's existing base software skill sets; while accessing and processing original data sources directly from multiple forms of data structure. It removes the current data access and usage complexity though a series of processes and methods that provide the user a simple, efficient and practical set of processes. Access is via a data process screen that defines the data source, using a point and click method instead of parameter commands to move data between incompatible data structures while utilizing spreadsheet software for compute and transformation processes and methods. The invention permits data movement, record re-structuring, and computing operations without having the user to manage tradition data management process and methods.

Embodiments of the present invention center on the average computer software skill sets of a business, end user, and subject matter expert user. Technically skilled IT users also have use options such as analysis and performance of system, network, website operations, or application log management.

The invention is preferably a self contained system design and methods that directly accesses data sources or creates copies of data sources. It provides a set of methods and processes that include system level software processes designed at an end user technical skills profile. In certain embodiments invention contains components for reject processing that includes data quality, data record repair, and reject statistics capture for the IT team supporting users. The embodiments of the invention are balancing the methods and function of data processes within the typical skills profile of end users. There are support components such as spreadsheet software used due to their widespread deployment and level of software function knowledge by a user.

Some of the invention's system level design attributes includes:
a. No parameter design in compute options
b. Complex technology interface and data management technology is contained within software object modules. The user does not have access nor see this level of program complexity
c. A point and click set of methods and processes
d. System level batch process option for large, repeat access or multiple data sources

Certain aspects of the invention can be embodied in the base method of providing users with direct data access and processing within specific design guidelines. It permits a user to move data quickly, without a technical knowledge base of incompatible data record structures, while maintaining data consistency and data quality in the transformation and computation processes of the data process engine 602. The criteria for a user's permitted and non-permitted process actions are embedded in the invention's design. One example is the initial action in working with data table that a user cannot modify within a database table. Whether the database table was created from a flat file or is a direct access of an existing table, a modification of the data is only permitted when the database table is copied into a spreadsheet 604 for change of record or field processing or computations. The increased direct data access by the large population of end users having minimal technical training requires a structure for maintaining data consistency and data quality in all aspects of organization.

The user via point and click process accesses a flat file (the source file) 610 having a zero first row (header record) 611 defining the field names. Each field name and data field of the file is separated by tabs or commas. A commercially available database is chosen (Oracle, MySQL, Server SQL) by the user or IT for the user to hold the database tables created by the invention.

In certain embodiments of the invention the Data Processing engine 602 provides a GUI that has a specific set of information and requirements with each file or table processed. The target database software used determines the security and naming requirements to establish a target table. The file is located and the computer access path is chosen via a mouse or keyboard. The process is: locate the file, point and click on the source file and fill in the target table, use ID, password, and type of database. The choice of which database software the user has access is a determination of the IT staff. In parallel with the transformation from a flat file 610 to a database table 612 the invention invokes two data process methods. First, each data process method activity is monitored by the Reject object component 605 for records that do not comply with the file format. If, when conducting the process of field and record integrity an error is confirmed, that record including the field (s) with errors detected is placed in the Reject table for evaluation and processing by the user. Second, each data process method activity is monitored and specific system, database software, and invention metrics/statistics are captured by the Stats objects 606 in its own table. The user or IT can review the Statistic table for the actions and activity occurring in the data process object modules process and methods and Statistics or Metrics process and methods.

In certain embodiments, the invention is a contained system design that in parallel will transform a flat file into a database table 612 with zero header record delimiter parsing to initiate the transform to the designated database table by the data process engines methods and processes 602 into the proper database protocol column name definition 603, 604.

In certain embodiments the operational library 609 captures the database tables created by the user and provides the access point to existing database tables as authorized by the Information Technology (IT) staff. The library assists IT in ungoverned data capture by requiring all data files being translated into a database table format in order to utilize the capabilities of the invention for applying data management processes without significant financial or technical resource investment by IT.

The operations data library (library) 609 can be located on the compute platform of the user or on a server location. The library is an SQL table that will remain even it the invention software is removed from the compute platform. The Rejects 605 and Stats 606 processes also utilize the SQL table structure and remain in place even if the invention is replaced by a later version. The only instance where the operations data library 609 is no longer available is if there is no back up processes when the compute device is replaced. In embodiments, the user has no access to the SQL table supporting the operational library 609, or Rejects 605 or Stats 606 processes.

A system where extraction from a personal compute platform of the user's data provides a process that determines by the stats/metrics subsystem tracking 606 what and how much data is accessed by a user for their work requirements. The library has two levels. The first level is for data files translated into a database table 604 by the user. The second level below a visual line is for access to existing databases the user is authorized to access for their work requirements. The files are copies of the flat files translated into tables and the direct access files require the user to execute a copy function to a spreadsheet in order to utilize and process; since ability to work and change within a database table is not permitted in the design. This is due to protecting the data quality and data consistency requirements found in enterprise data management process systems.

According to certain aspects in connection with the library 609, the invention provides support to the rapid, point and click access of the disparate data sources and tables across the organization to the end user without need of detailed technical knowledge but at the average user technical skill set. In certain embodiments of the data application processes supported by the invention, the user or an IT data expert has the options to position the users data and work product data for additional data process and ETL functionality. The data tables can be copied to a different user by standard IT data processes to be used in ETL processing. The full function ETL is in addition to the limited ETL function processing of the spreadsheet software utilized by the user for their job requirements. Spreadsheet software operating at the skill set of the user, enables ETL function to be used in the compute processes with one off projects. The data can also be positioned as input to commercial and complex applications by the enterprise or enterprise IT staff. The processes to access and use data created or processed by the user is based on the IT data management processes and maintaining data integrity and quality.

In general aspects, the invention is designed for structured, key based data and flat files with delimiters that have either zero header or non-zero header data structure sources. According to surveys by the software industry and analyst firms, these types of data constitute approximately 15% to 20% of all data sources within an organization. Embodiments of the invention do not support unstructured data such as email, social media, video streaming, etc. However, certain embodiments the invention can process metadata records that are retained in a database file or CSV or TSV structure files. The invention can support the metadata (data about data) structure for using the invention's processes and methods. The structured data's operating profile is a long cycle, high value to the organization because of supporting a company's operations. These forms of data have a data process management software support structure providing back up, recovery processes, archiving, and the capability to move the data from older to newer computer storage and computing platforms.

The following is a system level description of the invention and its support modules. A more detail explanation of the inventions objects follows this summary.

In certain embodiments, the data processes and methods used to re-structure flat file record formats into database tables is performed with a point and click execution from a main screen 601. In response, the data process engine 602 takes the flat file, parses the delimited file structure, and initiates the database software chosen to generate a full function vendor database table. In this example, a table 603 is created. The table 603 process options include filter and sort operation similar to spreadsheet software. Rows or columns can be selected to a copy function that then places them in a spreadsheet work-file 608 activated by the user.

In certain embodiments, a parallel set of processes 605 for capturing Reject records with field level errors and a Statistics object processes 606 to capture system and invention level metrics are also kept in tables when the data process engine 602 is being executed.

In certain embodiments, once the invention has transformed data from a flat file 611 to a database table 603, captured the rejected records and recorded the system and invention statistics of the process action, the user determines how the data records will be further processed. One direct change option the user has is to rename the column headings 604 of the database table. In one embodiment of the invention, the design point does not permit a user to directly modify, add or delete fields within the records of the table. There are two exceptions to this design point. First, the user can change the column heading of the table per the software criteria of the vendor code. Second, the user can append or un-append additional files to a table they have created for their work requirements. The user has options to copy rows or columns to a spreadsheet, filter search the data in the table, sort by column designation the records in an up or down progression. Finally the user can perform additional file transformation in an Append object set of processes 607 where data by time stamp is added to an existing table created by the user. The append enables web log system or production files, or period timed files to be accumulated for further processing.

In certain embodiments, per IT access approvals, the user can directly access existing database tables created by the production systems, third party sources, or other users. The user has the same function options with an existing table as a flat file conversion to a database table with the exception the user cannot modify the column heading, Delete table or perform an Undo Append process of an existing table as it will be a data quality issue. If the user wants the option to modify a column heading of an existing table 612 they are required to move data to a spreadsheet file 608, then convert to CSV 610 and the converted CSV file is loaded into a new database table 603. These processes and methods can be executed via the invention's point and click GUI design.

The above described examples are provided for illustration only and have been simplified to assist comprehension of the operation of certain embodiments of the system level of the invention. However, the invention is not limited to the configuration of elements described above or shown in the referenced figures. For example, certain embodiments of the invention comprise a client that may be implemented using an intelligent mobile appliance where the device has access to data sources. The range of compute platforms capable of using this invention is anticipated to expand over time as computing processes trends are opening to more platform options. Moreover, other computers may participate in the various transactions to be described below and these additional computers may lie in the communication path between the client and server through which data flows.

For purposes of the above and foregoing, the example embodiments are described using the base process of taking flat file data structures and transforming the data to a database table. Following the description of this example, the options and permutations of the invention using other input, working and output data structures will become apparent to those skilled in the art.

For the purposes of simplifying this description, the data portrayed in the various drawings may be construed as being record-oriented and it may be assumed that each record can have the same structure: that is, it can have the same fields. However it is contemplated that, in certain embodiments, the records may have only a small common set of fields, with the remaining fields being specific or customized for each record. In the latter case, the sorting and grouping of the records will be described as acting on fields common to the records involved.

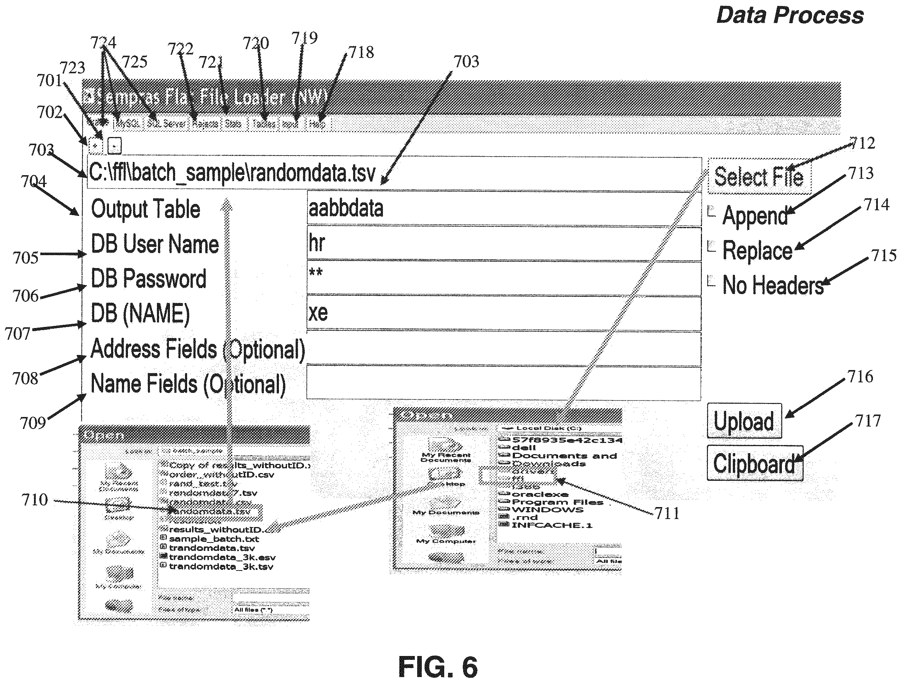

A simplified example of a data upload process will be described with reference to FIG. 6. For purposes of this description, the input data file structure portrayed in the various drawings is a Tab Separated Value (TSV) structure file randomdata.tsv. Furthermore, the commercial database portrayed in the various drawings is an Oracle XE database. However, those skilled in the art will appreciate the various possible permutations and alternatives after being taught by these examples.

In certain embodiments and as generally depicted the user via mouse device clicks on a GUI such as that shown in FIG. 6 to initiate one of three database target options: Oracle 723, MySQL 724 or SQL Server 725. The user selects the Oracle database tab 723 and the Data Process Screen displays the file and access sign on requirements. Each commercial database has its own version of this screen and its access requirements based upon the vendor's database sign on procedures. The user must follow the vendor aspects of sign on and access as the data process engine does not modify their requirements. The data Process Screen shown in FIG. 6 also provides the user option to expand tab 702 or reduce tab 701 the size of the GUI per the compute platform being used. This enables maximizing the user compute device screen size.

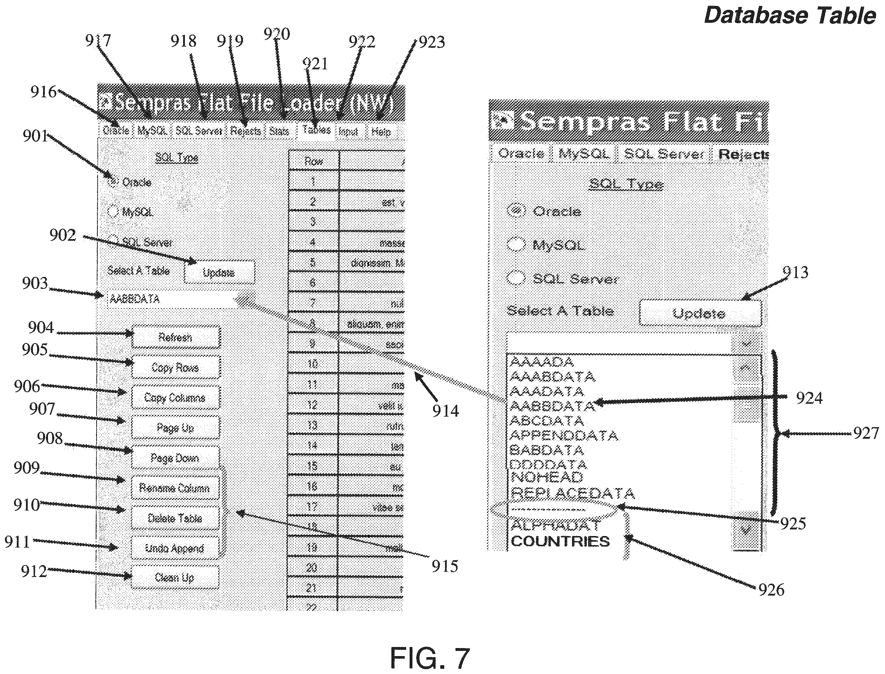

The base access, transform and use database create process uses a standard mouse device point and click or touch pad data file hierarchy search by the user to initiate locating the data flat file to be processes until the flat file is found. The example initiates with a pc running a XP operating system (Windows 7, Microsoft Server Systems are also supported) to find the high level access point to the data found in the FFL folder 711; the user then searches the FFL folder and with the mouse device points and clicks on the file randomdata.tsv 710. The user then clicks on the selected file in the file pop up screen 710 followed by the user clicking on the Select file tab 712. The path between the compute platform and the location of the data file is entered into the data process engine via the Select File box 703. In the example used in the Fig 7. the path defined is: C: \ffl\batch_sample\randomdata.tsv, 703. The data path lists libraries, file name and type in the path. The user is not required to know the technical path access definitions in order to use the invention - a design point that uses the standard end user technical skill set profile. The access path definition is dependent on the organizations data management and storage processes and the definitions of the data file hierarchy. The invention does not produce its own path definitions using the existing operating data system management paths. In another data management example the data path may consist of a logical name and path versus a physical path definition from the systems level processes is due to the IT groups data organization and procedures.

To complete the access set up process, the user enters an Output Table name box 704, designated aabbdata, the User Name box 705 designated as hr. The Output table name 704 is determined by the naming convention of the user or if part of a system processes the naming convention definition set by the organization's IT data management. The user next types in the DB (database) or user designated Password 706 and last the Oracle database type being accessed 707 - database is XE version (if a production Oracle database the DB name is ORCL). The database name or type are designated abbreviations by the commercial vendors and utilized by this invention. In certain embodiments of the invention the user has the process options to split out delimited fields of address 708 and name 709 automatically into subfields for address 708 of street, city, state, zip code and for name 709 the first, middle, last as identified by the user. The user also has the option to create automatically a batch process for DOS command execution with clicking on the clipboard command 717 after the upload 716 command is completed. This can be utilized more by IT to set up repeat data pulls for the invention such as pulling a web log systems or transaction tables on a period basis for further IT analysis.

In certain embodiments, and as generally depicted in FIG. 6, at this point the base process, the box field definitions to convert a zero row header TSV structured flat file and transform it into an Oracle database table are established and the user clicks on the Upload tab 716 to initiate the Data Process Engine that takes the flat file and transforms it into an Oracle XE version database table.

In certain embodiments the user then clicks on the Upload 716 after processing the file folder, in the example, and the data process engine 602 retrieves the flat file, initiates the transform via C++ code execution, parses the tab delimiters of the zero row header record of the source TSV structure file, randomdata.tsv recognizing the zero row record fields as field column headings names and passes the column headings for setting up the column headings in the database table. The user has the additional command options of reviewing the source data input file 719, for confirmation, going to the database table screen by the tables tab 720 (described in more detail below), or can utilize the Help function 718 for assistance.

In certain embodiments and as generally depicted in FIG. 6, the user clicks on the Upload Tab 716 to launch the transform process from flat file to a full function database table. The Data Process Engine 602 operates in the compute platform processor memory location. The Engine uploads first the zero header record of the TSV file randomdata.tsv and parses the delimiters of the header record. The Engine 602 then, per the database tab selection 723 -725 initiates the commercial data base software, an Oracle XE license 723 in the example. Using the parsed zero row header of the flat file the Engine 602 the parsed fields are translated by the invention to become the Oracle database column headings. There is a one to one correlation of column and column names between the TSV file example (randondata.tsv) and the Oracle database table created (aabbdata). The Data Process Engine 602 does not permit a partial fields or subset of records to be transferred in the translation process. Partial file or field translation require additional steps using the spreadsheet 608 function to achieve as outlined below.

In certain embodiments, the flat file data rows (randomdata.tsv) are brought into the compute platform memory; as is the database software and the database target Output Table (aabbdata) 704. The database processes also are positioned in main memory of the computer. The multiple software components of the Data Process Engine 602, the commercial database, the Reject Processes 605, and the Stats/ Metrics Processes 606 are all initialized and active in the main memory of the compute platform. In certain embodiments of the invention the Data Process Engine 602 determines the delimiters from the header line automatically and then using the delimiter processing of record and the record's fields; the Data Process Engine 602 translates the zero row header record into the column name convention protocol of the database software. It uses the file functions and via in-memory tables having cross reference connections between the flat file zero row, in the example, to the Oracle database 723 and the column headings fields. In the example the flat file field of the randomdata.tsv file is translated into an Oracle database column name field using the Oracle database functions into an Oracle defined column name equivalent. This column name is in the Oracle variable naming convention criteria. The translated file to table upon completion is a full function Oracle database table. Upon establishing the data table column heading names, on a row by row standard process the flat file records and the corresponding record fields are translated into a database record with the corresponding fields on a one to one row basis until the entire flat file randamdata.tsv is translated into the database table (aabbdata). There is no removal or addition of new field segments to the database table during this source to target load.

Certain aspects of the invention can be embodied in the processes post the execution of the Upload processes. Once the in-memory translation from flat file to data base table as defined in the Data Process Screen is completed, the results are conveyed automatically to the end user by an Upload Results Sub-screen. The screen presents a summary of the source and target actions processed by the invention. It includes the database vendor, the source data path, and if a flat file, the delimiter type -TSV, the output datatable -aabbdata, if a replacement for a prior table having the same name then it will be indicated in that field; also includes Start and end time, good records, Good addresses and if records have been rejected the number of rejected records in addition to the records that are good records successfully translated to the database table. Again the design provides key data and information to the end user for their working with data without being a technical expert on software. The screen documents the action and processes of the Data Process Engine's 602 work with the source and target files. This information is reflected in the Stats/Metrics sub-system 606.

Upon completion of the translation of the flat file randomdata.tsv to a database table aabbdata The Data Process Engine 602 has created a copy of the source data flat file as a database table for the user's work requirements. These target files will be maintained in the organizations IT data management system and processes. Even if the invention software is removed from the compute platform the database table aabbdata example remains as a data file. What the storage location is for the entity level database table is the determination of the IT data management team. There is an additional option of a copy will remain in the pc platform of the user.

In certain embodiments of the invention, there are two options to processing flat files for an end user. The first is a flat file having a zero row header record that has the field names of the record in the first or zero row. The user has a second flat file record structure called a no header record flat file. The invention has a separate Data Process Engine method 602 and processes that supports a no-header flat file and provides default column headings in database format when the flat file is processed into a database table.

The user begins the process with the Data Process File Screen shown in FIG 6. The design of the invention is to have as consistent flow of processes as possible. This is to reduce the complexity of what the user is required to know in order to use and re-structure data files for the user's purpose. The user utilizes the same processes as the zero record header on this screen. Via point and click, the user finds the file 703 with no header record; clicks on the Select File 712 tab and the path to the data is established. The Output Table 704 is typed, the DB User Name 705 is entered by typing, the DB Password 706 is also entered and the DB Name 707.

In certain embodiments of the invention the user then clicks on the No Headers Checkbox 715 on the Data Process screen. This notifies the invention it will be using processes designed specifically to work with a no header file. Once the user clicks on the No Header option 715 the final step is to click on the Upload Tab 716 to launch the same process as done for the zero header record.

The internal processes of the invention are executed in memory to create the cross references between the flat file to the database table as in the original processes. And as in the zero header sequence, the completion of the translation of the flat file record and fields of data to a database table with the same number of records and fields with a sub process screen showing the Upload Results. The recorded information categories are the same as in the original processes. In certain embodiments of the invention, the flow of processes and the methods is designed to be as consistent as possible. This means keeping parameter function to a minimum and thereby reducing complexity of the design and use for the end user.

An example implementation of a GUI for implementing the above described data processing functions will be illustrated in further detail in the following figures.

A Database Table Process screen is illustrated in FIG 7. When the screen appears after the source 302 to target 320 is identified the screen has tab process options but does not display any database table or input flat file. The user has the option of what view of the data file to initiate their work and the follow on sequence of data access. This screen uses point and click processes for the user to work with the database tables displayed via this screen. In certain embodiments this is also a part of the Data Process Engine 602; however the process for the data base table and ETL type function are initiated from this screen via the methods and process with a database table created and the use of spreadsheet software function.

The tabs across the top of this screen enable the user to move between the core functions of the invention without paging. In certain embodiments of the invention the tabs include:
a. Oracle Tab 916: returns to Data Table Screen and displays the Oracle version of that screen for flat file processing. Click on this tab and the user initiates a new data process and terminates a prior database table access. This process part of the design permits only one data process and work session occurring at a time for the end user. This is done in order to prevent data quality issues from occurring with back and forth screen access found in most software.
b. MySQL Tab 917: returns to Data Table Screen and displays the MySQL version of that screen for flat file processing. Click on this tab and the user initiates a new data process and terminates the prior database table access. This process part of the design permits only one data process and work session occurring at a time for the end user. This is done in order to prevent data quality issues from occurring with back and forth screen access found in most software.
c. SLQ Server Tab 918: returns to Data Table Screen and displays the SQL Server version of that screen for flat file processing. Click on this tab and the user initiates a new data process and terminates the prior database table access. This process part of the design permits only one data process and work session occurring at a time for the end user. This is done in order to prevent data quality issues from occurring with back and forth screen access found in most software.
d. Rejects Tab 919: displays the reject screen master file as a database table. The Table captures all rejects occurring with the compute or server platform the invention resides on.
e. Stats Tab 920: displays the statistics/metrics capture from the system level of the invention and the operating system. This captures all action and activity by data file with the compute or server platform upon the invention resides on.
f. Table Tab 921: Displays the database table created from the flat file. Also displays an existing database table accessed by the end user and not requiring transformation processes of the invention to view a database table. There are some process limitations when direct access of an existing table
g. Input Tab 922: Displays the flat file input data and the zero row header record it if it is a component of the flat file. It also displays the comma separation between the fields of each record. NOTE: in certain embodiments of the invention, the Data Process Engine 602 also supports a no zero record flat file translation to a database table target as with a zero header but with some added steps - see the definition later in this content.
h. Help Tab 923: reference on how to use the invention by the end user including both point and click and batch process options. Provides the user a quick reference on the software and what the results looks like post an action.

Certain aspects of the invention can be embodied in the processing options with the database table created with the Data Process Engine 602.

In certain embodiments, and as generally depicted in FIG. 7, after the upload process described in connection with FIG. 6, the invention initiates the file processes for the Database Table Screen in response to a user clicking on the Table 921 or the Input (File) 922 to work with the target or source data structures. The screen displays by highlight the database being used 901; in the example it is an Oracle format. The user clicking on the Input Tab 922 will generate the display of the full flat file source for the user to review. This includes the zero row record, if present. In the example the flat file field of the **randomdata.tsv** being Uploaded 716 to the aabbdata table, the user can they review both the input TSV file and the table created from that file.

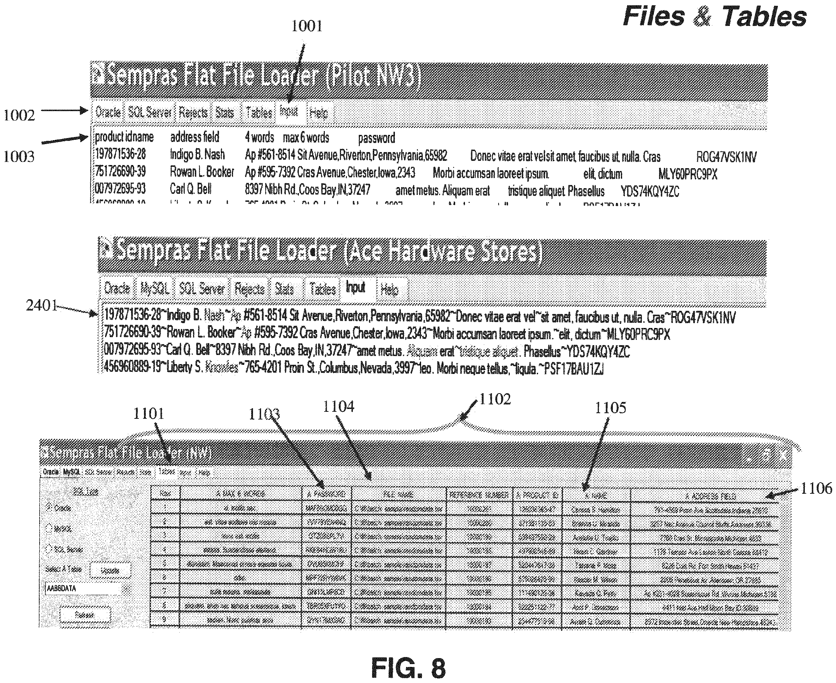

For example, as shown in FIG. 8, the user clicks on the Input Tab 1001 on the Database screen and the invention displays the input file randomdata.tsv in a readable form with a zero row header record 1002 enabling the user to evaluate the data source and column headings in the file. If this were a no zero row header the data delimited records would begin immediately without column text delimiter first row. The second row onward 1003 is the data delimited data records processed into a table. The Input tab 1001 is for improved user productivity in assess their data sources versus requirements.

As shown, another data process tab in this example implementation is the Table Tab 921. The user clicks on this tab to position the launch of the database table created as a target file. Clicking on this tab positions the user to then initialize the database table AABBDATA created with the invention. The user clicks on the library pull down tab 904 and causing the list of database tables to be displayed 927 that the user has access permission from his compute platform. The user then clicks on library pull down Tab 913 to select the database 914 table for further actions. When the user clicks on the up/down bar displays 913 two groupings of database tables are displayed. Those database table names above the dotted line boundary 924 in the library are tables created by the user or within the user's organization. Those database tables below 926 the dotted boundary 925 line are tables pre-existing, in this example, Oracle tables the user can access for their work.

As shown in FIG. 8, in certain embodiments the database table screen displays the entire columns structure 1102 and row based records for the user. Each column 1106 has been translated, in the example of randomdata.tsv into an Oracle database table 1101 compliant form aabbdata. The table columns 1106 are on a one to one match with the header record of the TSV file in the example including Password 1103, File Name Column 1104, and A_Name 1105. The user can move between the data file and the database table tabs via point and click to compare and assess the data for work requirements. This enables a more rapid assessment between these two tabs of what the value proposition of the data is to the user.

Returning to FIG. 7, in certain embodiments of the invention, the tables a user can access have further qualifiers to insure data security and integrity. First, if the table being selected is an Server SQL 918 table and the user has authority for only Oracle 916 tables, then the user cannot access any Server SQL table in the operational library since these files will not be displayed. Such a situation is not a frequent occurrence due to the design of the security for the invention that permits by the invention security process, and the ability for the IT data management team to deactivate databases in the Data Process Engine 602 the user is not authorized to access. Therefore, the Server SQL 918 tab in this example would not even appear across the top of the Database Table screens in FIG. 7.

Second, certain aspects of the invention can be embodied when the user accesses an existing table not created by the user but is from another source in or outside the organization. These are the tables found below the dotted separation line 925 of the operational library pull down tab listing 927. Data the user did not create will have significant quality and integrity issues. The Delete 910 and Undo append 911 are also de-deactivated 915 in order to prevent unauthorized or accidental data loss since at this level these are original source database tables' status within the invention's data management processes.

The table displayed is typically kept in the main memory of the compute platform. This translate into a portion of the records of the table being displayed due to memory capacity constraints of the overhead in a commercial database that is not related to the invention. The user can access additional rows of the table through the Page Down Tab 908 or Page Up Tab 907. This is a standard paging function. The column headings of the table are a one to one translation from the flat file source.

In certain embodiments of the invention, the user can bypass the database row record limits of display and use the Copy Rows 905 or Copy Columns 906 processes to copy some or all of the table rows for pasting into a spreadsheet 608 for additional ETL and/or Data Application compute processing. The user clicks on the Copy Row Tab and a sub process screen appears that permits the user to copy any rows of the table including the zero row header as done in a spreadsheet copy row function. The user activates a new spreadsheet and the header, data rows are pasted function to the spreadsheet. From this point all further Data Application or data processes use the spreadsheets compute and programming functionality. The spreadsheet software is unaware of the inventions processes and methods. Upon completion of the ETL or Data applications the user saves the spreadsheet as a CSV flat file followed by a flat file process to load the revised data into the same table or a new table at the discretion of the user. NOTE: the user is working with copies of the source data and therefore processes are feasible without impact to the organization's data quality and data integrity.

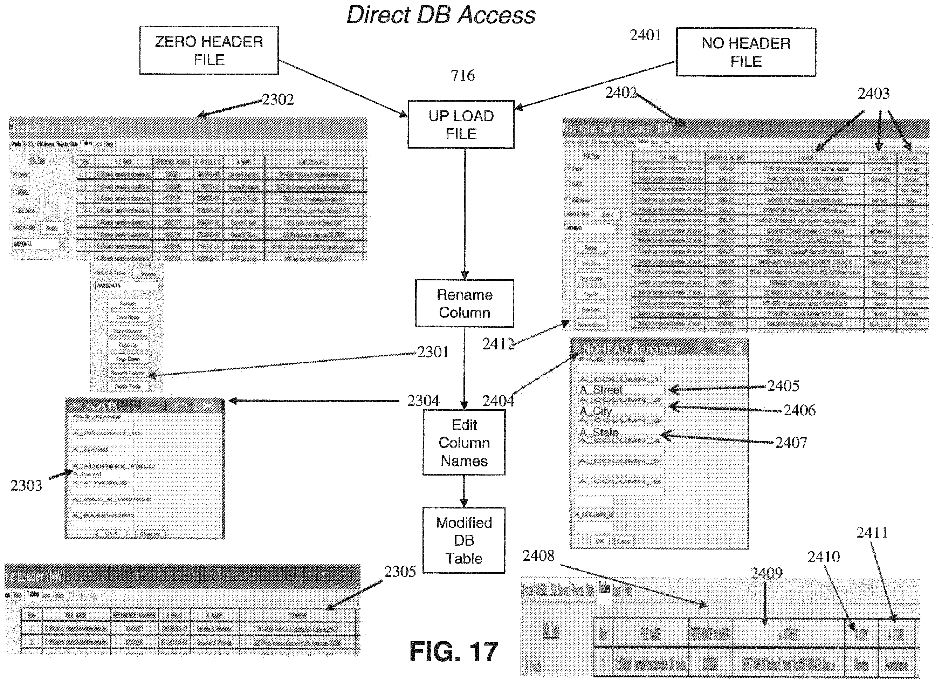

The remaining process tabs on the left side of the Database Table Process in FIG 7. This screen provides limited edit function directly against a database table created by the user 716. The Rename Column Tab 909 provides user with ability to rename the column name transferred from the zero row header record and modify or change out the initial column header, in this case for an Oracle database table 2302. The user clicks on the Rename Column Tab 909, 2301 and a sub process screen 2304 is generated on the database table displayed. In certain embodiments of the invention the sub process Rename Screen displays the existing column name headings and next to each heading is a field box for the user to modify the field header name to the requirements needed. The user will have to conform to the database software's naming convention and to that of the IT data management team's naming conventions. The revised header column name is entered in to the adjacent field box. In the example in FIG. 17, the A_ Address_Field 2303 is modified by the user to Address. When the modifications have been completely entered into the sub-process screen, the user can click OK and the column heading is changed or click cancel and the column heading remains as before. The result is modified column header 2305 names upon click of the OK tab.

Again, the user clicks on the Database Table Screen in FIG. 7. They have the option to review the file via clicking on the Input Tab 922 or clicking on the operational library pull down tab 903 access the table with the no header table and clicking it to the file box 903. The user then clicks on the Refresh Tab 904 and the no header database table is displayed. In certain embodiments, unlike the zero row header file having column names to use, the invention creates default name header for each column (data field) in the table on a one to one field basis between the flat file and the database table. The default names are in the structure for the database vendor being used, in the example this is an Oracle database and therefore naming structure. The user clicks on the Rename Column Tab and the sub-process screen displays. The user enters in new column header names for each column of the table. Click the OK button and the column header names are modified from default definition in the table to the user's designation to A_Street, to A_City, and to A_State. The user can continue to change the column header names at their discretion. The design does not have limits to the number of times the user invokes the Rename column process.

Certain aspects of the invention can be embodied in the Refresh Tab 904. This is a core process for the Database Table Screen. The first design purpose of the Refresh Tab 904 is to initiate the display of the database table after the processing of the flat file translation to database table has been executed by the Data Process Engine 602. Each time the table being accessed changes to a new user requirement via the same process. That of the user clicks on a file in the pull down tab for the operational library listings 903 or can first click on the Update 902 command to refresh and retrieve all current databases the user can access from other sources. They select the table and place it in the library tab 903 and then click on the Refresh Tab 904 to initiate the display of the current data table needed by the user.

In certain embodiments of the invention the Refresh Tab 904 is a process the user will reset frequently based on the requirements for their work load. The repeat process sequence is designed to reduce the number of components and commands the user must deal with in order to move data quickly, efficiently and with data quality / integrity.

The Refresh Tab 904 is a reset process when a filter/search or sort command has been executed against a database table. In embodiments, the user can run a several level filer/search process starting with a 10,000 row table and with a multi-step filter/search reduce the qualified search record population to 500 rows. Upon completion of the Filter/Search the user can click on the Refresh Tab 904 and the original version of the 10,000 record table will be restored for further processing by the user.

In certain embodiments of the invention, the Delete Table Tab 910 provides the user with a simple process to manage and limit the number of tables to work and manage. The user clicks on an existing table, above the dotted line in the operational pull down tab to delete, clicks on that table placing the table into the library box 903. The user clicks on the Delete Table Tab 910. A sub process screen appears to confirm the intent to delete the table or option to cancel. When the user clicks on the confirmation to delete the table and its data are deleted. Again, the table deleted by the design is a copy of a data source kept in a file structure at another storage location or address. An objective of the invention is not to delete original data sources to preserve data integrity and quality. A second delete option is when a table is deleted; the user has the option to delete any reject records in the reject sub-system 605 with the Clean Up 912 command. In certain embodiments of the invention the clean up 912 removes all rejects associated with the table from the rejects system in order to remove unneeded data records.

Certain aspects of the invention can be embodied in the sub processes components provided for analysis and organizing database tables post its creation. There are two sub-component functions available to every database table including tables created by the user and those third party database tables created by IT or other groups outside of the user/user's organization. The first component function process is the SORT method. The second is Filter/Search method. The base aspects are standard process as found in a spreadsheet software design.

For the first component function process, in certain embodiments, a user can select a particular column of a database table and using a mouse device left click on a column name header and the records with be sorted in a up or down sequence in alpha numeric order. For example if using the name column of the aabbdata table the user can select the name column and sort all the names in the file even if not displayed at the time of executing the function, the column is sorted immediately. There is no restriction on the user can do this for each column to organize the records by the selected column. This process is based on the user spreadsheet software skill set and its Sort function. The objective is to leverage the existing end user skill sets and provide the user with extensive data process and use options with the department, organization or enterprise data sources.

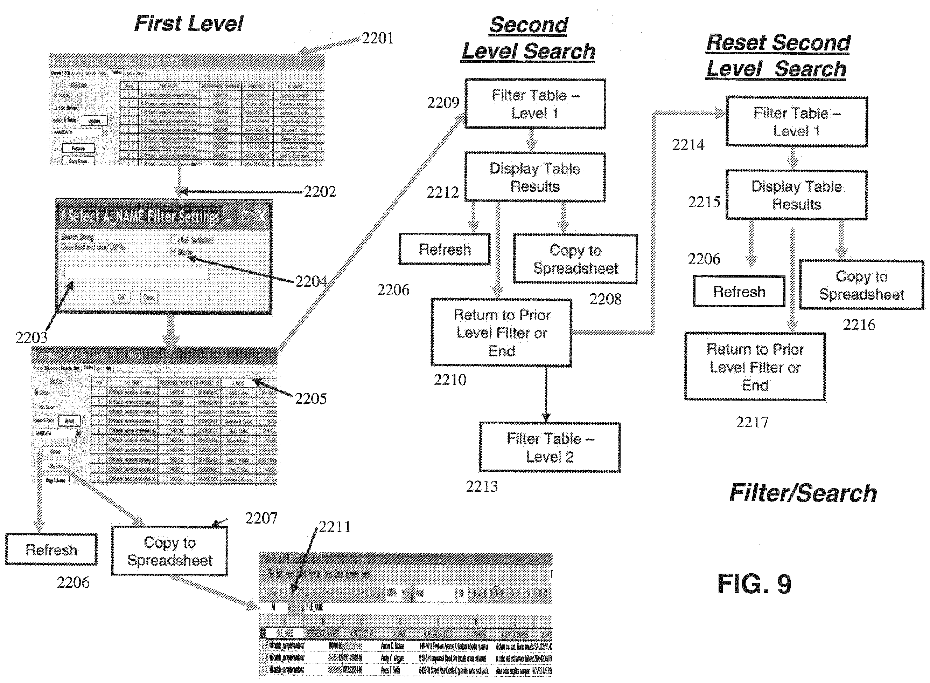

An example of a second component process is described in connection with FIG. 9. In these embodiments, the user command processes includes a filter/search command. In some embodiments, the filtering command includes user-supplied criteria. The criteria is executed by the user right click on a column of a database table 2201 to have a sub-screen appear for the filter/search process 2204. The user can either have the search be case sensitive or be at the start of the content 2204 in the specified column. The results of a filter/search iteration are the rows of the database table 2205 meeting the criterion. The criterion is entered into the box 2203 and click on OK to execute the filter/search. The search can be a repeat process where each iteration of the filter/search can be based on the prior execution. With each iteration of filter/search, the user can change the column being searched, the criterion of at the beginning versus case sensitive. As each iteration of filter/search occurs the column header row is turns to white 2212 so the user knows which columns have been used. Further more in the embodiment the user, for example can do a multiple level search and upon completion of each iteration use the Copy Row 905 or Copy Column 906 of the processed Oracle database table aabbdata, do a Copy Row selection 2208 to transfer the results to a spreadsheet file 2211 via a copy and paste for further compute processing.

In certain embodiments, as shown in FIG. 9, the filter/search process can go through several iterations/cycles of criterion and upon the final iteration and processes the user can reverse each current iteration to the prior iteration filter/search 2209 level The example from FIG. 9 shows that after completion of the filter/search process, the user invokes the process a second time 2209 and proceeds to run a filter/search command with display of the results 2212 with the filtered column on the table header being highlighted for the user to track. The options remain in the second search to refresh the table display back to the original table 2201, copy the second search results 2208 or return to the prior level of search 2210, in the example to the first search level results. If a new variation of search is done from the first level search, the user command initiates this second version 2213 in the same command sequence and actions 2214 of search, display 2215, with option to Refresh 2206, Copy 2216, or return to prior level 2217. An specific example of this type of search is running a first level search to locate all the insured drivers in a state. The second level versions of the search would be to look for only drivers located in City A. Copy that result to a spreadsheet for the user to process. Then return to prior level and search for drivers in City B. There is no restriction to the number of levels of search other than filtering to the point of no rows of the table meeting the criterion The embodiment then provides the option to end this filter/search cycle or backtrack to prior levels of the filter/search iterations in this execution. However, when the filter/search is completed the user invokes the Refresh Tab 904 to bring the Oracle database table aabbdata back to its original state of all rows and columns.

Upon completion of the filter/search, the process screen can be invoked again for additional filter/searched 2202. Table can be either created simply accessed from third party source by the user. In some of these embodiments, the user command includes a grouping command and the set of records includes records grouped by one or more fields of the records.. The user can run a several lever filer/search process starting with a 10,000 row table and with a multi-step filter/search reduce the qualified search record population to 500 rows. Upon completion of the Filter/Search the user can click on the Refresh Tab 904 and the original version of the 10,000 record table will be restored for further processing by the user.

In certain embodiments, the user has additional component process options when translating from a CSV or TSV flat file to a database table. The embodiments are based upon removing impediments to processing records by an end user. These are options and are not required for the base functions of the invention. They are however, designed as to improve data quality, reduce data errors, and accelerate the translation of flat files to other data structures.

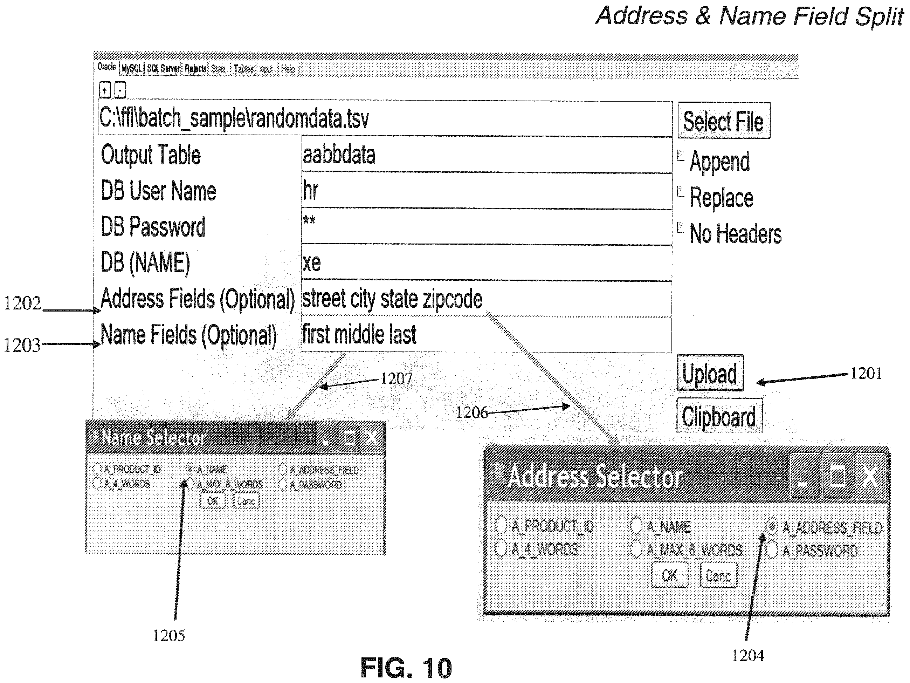

One example additional component process will be described in connection with FIG. 10. In this example embodiment, Address Fields Option and Name Field Option are applied to the key base records. These options are not typically available for a financial spreadsheet structure with cell formulas. However, the preponderance of data being structured data is a record form versus a financial question based data.

In certain embodiments, the records being translated into a database table contain a field with name data and/or also a field within the record. In these embodiments, the user when transforming a flat file into a database table has the option to split out the address and/or Name fields of the flat file when moving it to a table record structure

In certain embodiments the user can select the Address Fields Option after entering the standard fields for a file transfer to a database table. The embodiment has the user place the sub-field names into the Address box 1202 with the street, city, state, zip code. The user can also split the name field in the same process or run them as independent actions. The Name Fields Option 1203 enters first middle last. Upon the user clicking on Upload Tab and prior to final translate execution into a table, the invention brings up two sub process screens. The first is the Address Selector screen 1206 where the field for the address to be split out is identified with a click on the button. Click OK and the Name sub process screen 1207 appears and the user clicks on the radial identifying the field to be split out for the record name field. In certain embodiments the user clicks Upload Tab Process 1201.

The process parses the address and name flat file record fields whether the file is a zero row header record or no header record as the default field name convention in either file structure has been translated into, in this example, an Oracle database standard column/ field naming convention see in the Address 1204 and Name 1205 Options sub process screens. The fields target for splitting are parsed by the delimiters within the field for the address segment by the spaces or commas found within the field segment between street, city, state and zip code of the flat file, in this example randomdata.tsv, be it CSV or TSV record structure. The zip code field length of 5 to 9 characters zip code is automatically placed in the target field segment as the invention is parsing the field and not confirming the length of the zip code for validity or data quality purpose. The data quality and record consistency occurs post the table being created. The name field is parsed by spaces or commas between the first, middle and last names in that field segment. The embodiment in similar delimiter parsing and using work tables within the invention produce a one to one correlation between the flat file and the table produced.

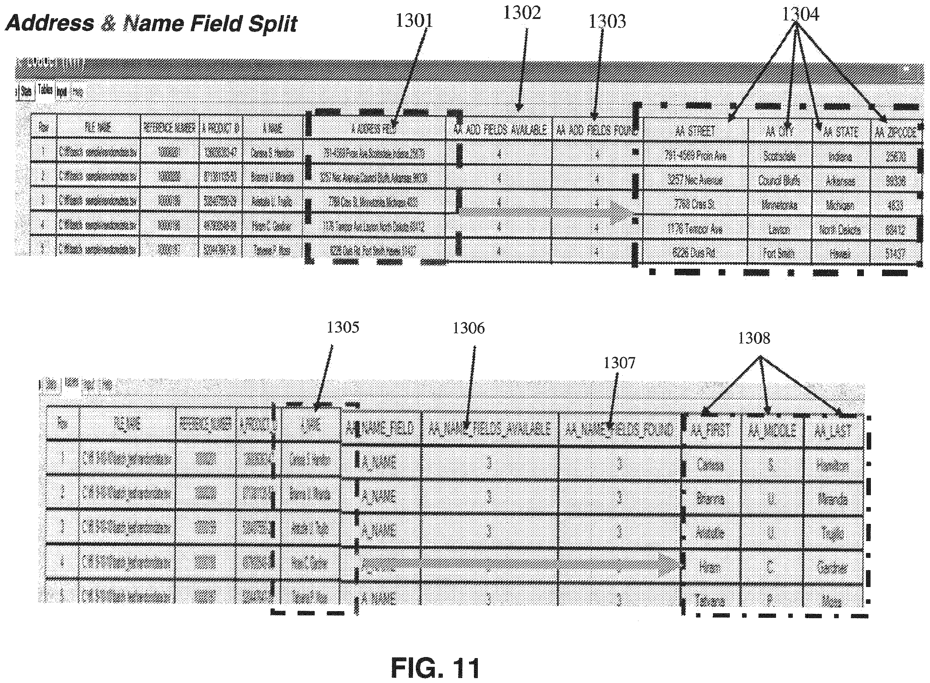

In certain embodiments, the in-field parsing of Address and Name field segments is done in a separate set of in-memory processes. The embodiment keeps the original Address 1301 and Name fields 1305 of the source and target intact within the position of field segments within the record. As shown in FIG. 11, the parsed Address and Name fields are placed as new additional field Address 1304 and Name 1308 segments at the end of the record displayed in database structure format. The original fields with name and address are retained in each record of the table and are displayed with the split field equivalent columns. The user can correlate the original field segments to the split out fields of Address and Name for both quality and ease of use requirements for the end user. Furthermore, the embodiment adds two additional field segments to the target database table of showing the Fields Available for Address 1302 and Name 1306 and the fields found for Address 1303 and Name 1307 as part of the data quality and consistency for each row of the database table aabbdata. The standard database table processes of Sort (described above), Filter/Search (described above in connection with FIG. 9), Copy Row 905, Copy Column 906 and Rename 909 Column are available to the user.

The embodiment follows the processes from flat file translated to a database table. The user clicks on the Database Table Process Screen shown in FIG. 7 to access the split fields file randomdata.tsv. The table created is processed like any other table created by the user. The embodiment saves errors and time in the productivity to the user.

In embodiments, the invention provides the user the option to reuse the existing database table names as work files instead of for a permanent database table being produced. A Replacement Tab 714 shown in FIG. 6 overlays the prior database table and the prior table with the same name is deleted from the operations data library 927 of the invention. The embodiment is the table will have been Copied by Rows 905 and/or Columns 906 to a spreadsheet file for ease of work for the user at their data process skill set provided by the spreadsheet software design. If error is made in the translation of the file to table process the Replace Tab 714 provides an option to restart without any programming or command requirements. The user can re-run the same file to table profile entered on the Data Process Screen and execute the processes again and again.

Returning to FIG. 5, in certain embodiments, the invention provides an Append Option 607 to extend the database table over several time periods attaching new and additional data records to an existing database table created by the user. The embodiment includes attaching additional records translated from other file format into a database table form that matched the existing column name headings and existing number of columns/segments in the current table with the records of a new table being attached.

An embodiment uses the same processes as a flat file being translated into a database table. All of the processes and information is entered with the exception of two elements. First the Replace Tab is not activated since the process is adding not replacing an existing table. Second, the user clicking on the Append Tab 713 initiates additional process modules plus the standard Data Engine Process 602 invoked by the user. The user must know the database table name being the base table to append additional data records. If the number of columns and column headings are not exactly the same, the append action will be terminated. The criteria of data quality, integrity and consistency determine what the user is or is not permitted to process. Again the design is controlling the range of options based on the defined skill sets of end users.

Once the required information is entered, the Append 713 option can be activated by the user. The embodiment of the append process can include the Address and Name Field options. Each is run in-memory processes and their own procedures as an independent translation of delimiter based data record to database table record processes by data record processed.

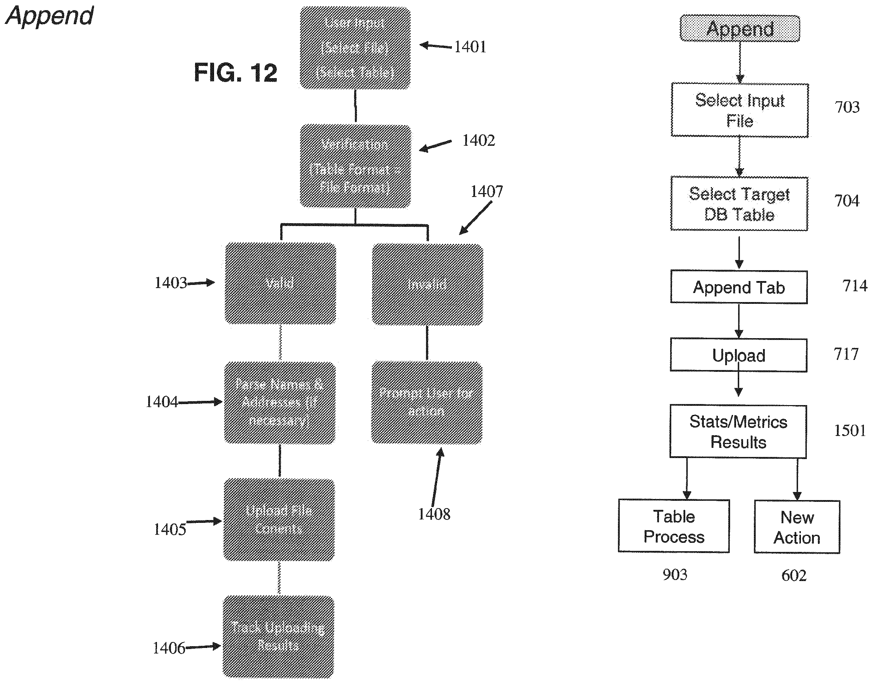

An embodiment of the Append process 607 is further illustrated in FIG. 12. In this example, Append is done in two phases. Phase 1 is the flat file with delimiter field separation with or without a zero record header field description 1401 by parsing the input data file fields into columns of equal number, reading the input to determine which column to parse and then parsing the selected columns based upon the format provided by the input with each record of the flat file having the same number of columns. In parallel the invention initiates, per the Data Process Engine, the database version defined by the user. Both the column parsed flat file and the target database table will have the same number of columns in each format. The tables within the Data Process Engine are kept in the compute platform memory. The data is then on a one to one 1402 column basis translated into a database structure fields and records for validation confirmation 1403. Upon completion of the translation process each record in the flat file matches the number and column headings in the database table record structure. If there are Addresses and Name parsing requirements 1404 the process parses those field splits by invoking those split field process. If there is a field(s) within a record where the data structure of the flat file does not meet the form criterion of the database table record structure, those records are placed in the Reject Master table and kept until further processing by the end user or an IT expert. The entire file is kept in memory for the process and the process is executed on a record by record basis.

Phase II of the append process is the Append process reads the user input to determine/locate a target table the appended data will be placed, the process will verify the content of the current table to the addendum table loaded into memory of the number of columns and column header descriptions. Upon verification of the match process, the Append process uploads 1405 the contents of the converted flat file to database table into the current table. In a parallel process component the Stats/Metrics process uploads 1406 the captured statistics for the operation of appending the new data.

If the number of columns or column header do not match, the append process does not permit the new data to attach as being invalid 1407 to the current target database table and issues a notice 1408 to the user. All done by the user via point and click process.

In certain embodiments, the Append process is used in a capture and process to database record of compute platform operations data.. This type of data includes system performance, rate of execution of programs, amount of compute memory utilized, activity level of the compute processor, etc.

An example of the Append Process is using the initial file to table created in the Upload 716 in FIG. 6 of aabbdata found in the operations data library 903. When a second group of data content is determined by the user to be attached to the original aabbdata table, the user follows the same process previously described in FIG. 6 to locate a data file 703, insert aabbdata in the Output Table box 794; followed by the DB User Name, Password DB Name 705-707. The user activates the Append Tab 713 and the Upload 716 is executed. The user can tell the status of the append action by the Stats/Metrics sub-screen described in more detail below. The screen will show the number of records translated and the total records in the table aabbdata. The user process option is either to access the aabbdata table or move to another data action.

It should be noted that, in certain embodiments, operational IT or web services data can be automated using a batch process program. Instead of the user on a daily basis running the append function from a GUI as illustrated herein, a Clipboard function can be used by IT users to create a periodic batch program to be used as a scheduled job to perform the initial capture of the data from a web based flat file into a database table. This reduces the data quality error rate and other issues. It provides the system analysts with a simple, efficient process to monitor their systems and be given notice when an action is required to fix a problem. The invention permits the users to minimize training on yet more software while leveraging their systems analyst skills.

In one example embodiment of a batch process, the invention is used to work with operations systems data of a web site or server compute platform where hundreds of thousand of performance records are created daily. The IT staff must rapidly evaluate operating issues and performance via these records. The batch process can be utilized to create the initial database table so the users can quickly process the results. There is no change in the embodiment of the invention by using the batch procedures. It is a production compute systems level criterion that can improve access and productivity.

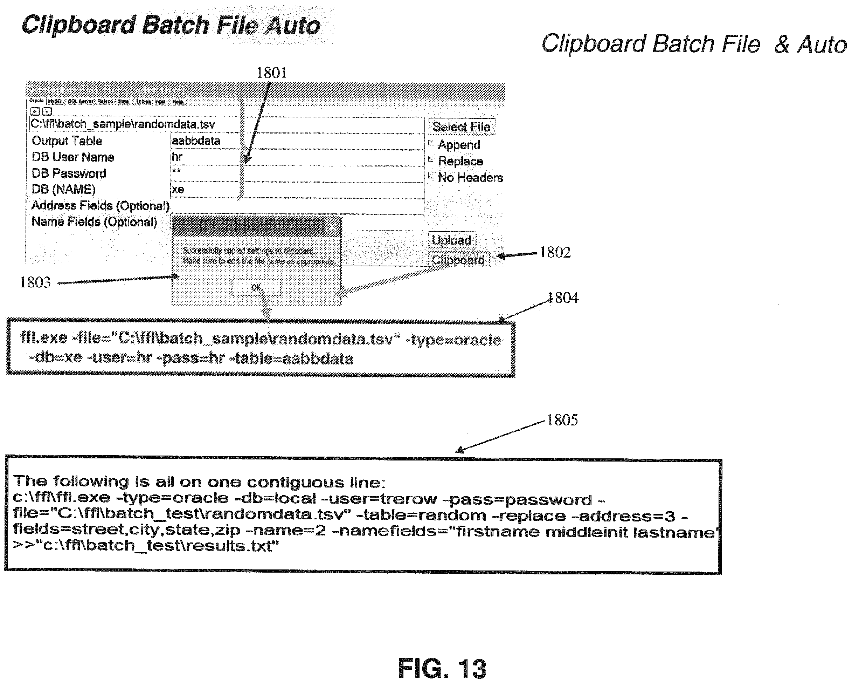

In embodiments described in more detail below, the batch process is by text file that creates the same information used for the Data Process Engine 602 to execute the function the user creates with the Data Process Screen and the set up of the requirements to translate a flat file into a database table. For example, as shown in FIG. 13, once a standard user input is created and the Upload Tab is executed, the user can perform a ClipBoard 1802 command execute 1803 via point and click option and the batch text equivalent is created automatically. The use clicks on the success tab and then pastes the automatically generated batch program into a document 1804. This contains the batch command processes for executing an Upload sequence of a data file to a table. Skilled users or IT staff can create a batch program through the instructions in the invention 1805. The point and click process is translated into the DOS program elements. The program elements are equivalent to the point and click process It produces the parameter equivalent with the execution of the command. The process is to assist building a job schedule option process within the operating system job scheduler for repletion data file translations. The second option with batch is a standard DOS command process option by using the invention's parameter options in batch execution mode instead of point and click. The stand alone batch process produces the execution of a flat file to a database table including the name and address field split out options found in FIG. 11. The embodiment then permits the text batch file to be saved for being placed in an operating system job scheduler for automated execution on a periodic or one time basis by the user via the IT resources

Certain aspects of the invention can be embodied in a second batch option where an expert IT user can create the detailed command process file to be used to process a flat file to a database table using the function of the invention through a job scheduler process of the operating system of the organization. The text script basis for the parameters and definitions entered in the Data Process Screen or manually generated primarily by IT skill level user. The batch process design has been restricted to only the translation from file to database table. This embodiment is intended as a support option when significant amounts of data requires to be translated and processed from file to table record and it is impractical to conduct the default option of hands on point and click methodology.

Returning to FIG. 7, certain aspects of the invention can be embodied with the process for the user to Undo Append 911 to a database table. Embodiments of the invention do not permit the deletion of rows of a database table for data quality and security criteria. If a user wishes to delete specific rows or columns of a database table the process is to utilize the Copy Rows Tab Function 905, paste to a spreadsheet and with the spreadsheet process functions delete specific rows or columns of the table. The return process is to save the spreadsheet as a flat file in CSV structure and restore the flat file as a database table via the translation process. The ability to delete specified columns also supports setting column database table compute processing options.

The Undo Append 911 function requires an existing append to the database or the process will not activate. The user using the operational library selects a database table aabbdata clicks the table into the access position. The user clicks on the Undo Append Tab 911. This action causes the invention to pull all of the appended records to this database by the time stamp filter sub field 2603 defined by the user that qualify. The time stamp filter is in order for the user to decide which appended recorded is to be deleted from this table. The time stamp filter is a different, independent process than the filter/search process utilized within a table. The file to undo is selected via point and click process and the delete process occurs when the user clicks on an OK 2604 button. If no record files appear in the sub process screen has no Undo Append 911options to execute. This is an embodiment of the strict design process employed in the invention for data management control processes to prevent unauthorized actions being take with database tables by a user.

With reference to the example of FIG. 6, the specific Undo Append process automatically removes an existing appended database table in the user operations data library 609. This is done after the verifying the user input to determine the target table. Then reading a tracking table (Stats/Metrics table) 606 to determine what undo action options are available. The process once verified on the action as directed by the user, the Undo Append process takes the user input to direct the process to the correct undo. Only one append data action is permitted with each execution. Once the appended data has been verified the Undo process and method removes the appended data records or rows from the specified database table. This action is not available to the user for existing database tables they have authorization to access. Doing so impacts data quality and integrity processes.

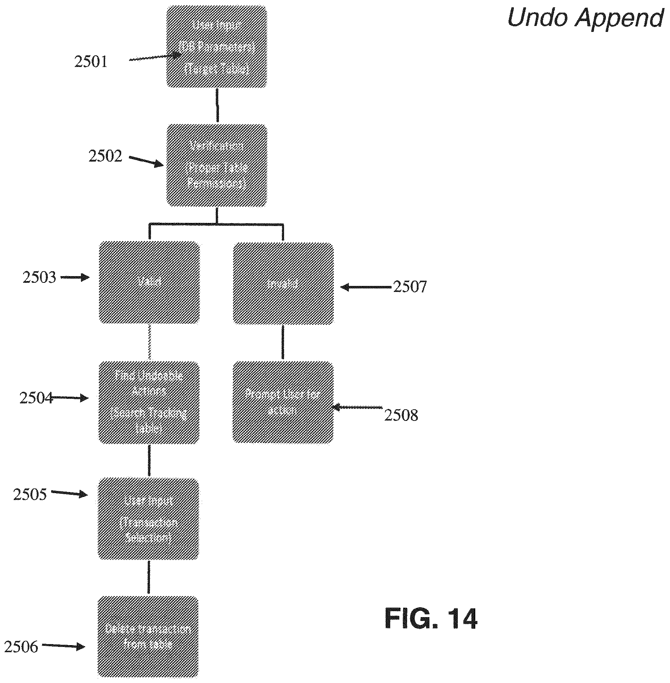

As shown in the example of FIG. 14, the Undo Append 2501 requires an existing append to the database 2502 or the process will not activate 2507 and is marked as invalid message displayed in the user's compute platform GUI. In certain embodiments, the un-append is by the time stamp within file name 2504. The initiation of the un-append command validates the table having an append 2502 through the stats maintained. If table requested does not have an appended file 2507 or the append to delete is not in the operations data library 609 the request is rejected via a message 2508.to the user GUI.

Certain aspects of the invention can be embodied in the Undo or un-append process are done through command of Undo Append 2503 brings up from the operations data library 609 the append actions against the database table requested. If an entry or action is present the command will continue upon execute to delete or undo the appended file. This does not impact the original flat file source only what appended as a database table. The undo removes automatically the appended data in the appended database table through verifying the tracking table upload 2503 statistics to determine the undoable actions 2505, combines with input of the user 2505 direction of data to undo and removing the data 2506 from the table

This does not eliminate the potential for the deleted append records to be stored as a stand alone database table under a different table file name prior to the Undo Append action. Again the invention is designed for quality and security purposes to work with copies of the data sources due to the user typically using the data in one off projects or small group efforts. End users are not typically executing production data files in IT environments.

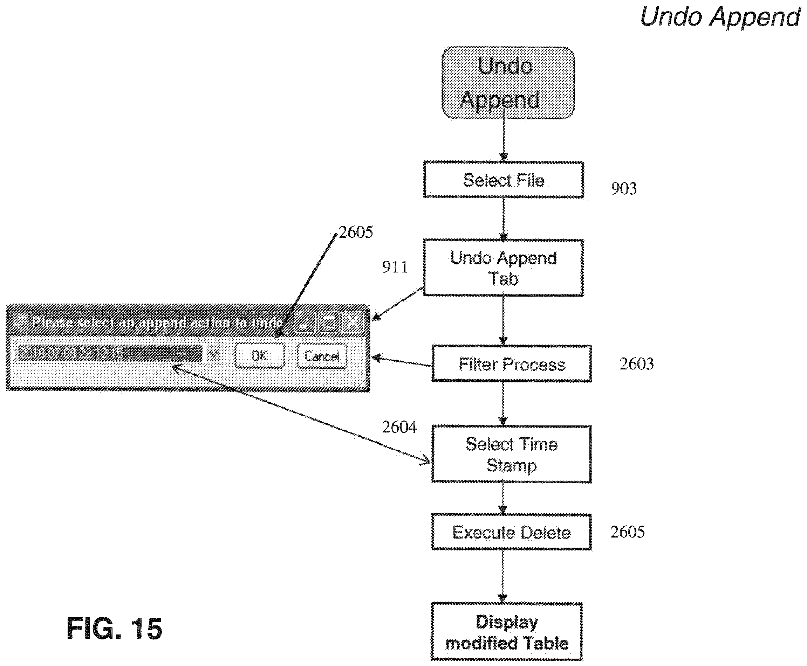

An example of the Undo Append command is shown in FIG. 15. In embodiments, the Undo Append requires an existing append to the database or the process will not activate. The user using the operational library selects a database table aabbdata 2601 clicks the table into the access position. The user clicks on the Undo Append Tab 2602. This action causes the invention to pull all of the appended records to this database 2603 in order for the user to decide which appended recorded are to be deleted from this table. The sub to this file is aabbdata. The file to undo is selected via click process and the delete process occurs when the user clicks on the OK button 2604. The result of the tables listing is displayed after a delete command is executed to undo an append file 2605. If no record files appear in the sub process screen has no Undo options to execute. This is an embodiment of the strict design process employed in the invention for data management control processes to prevent unauthorized actions being taken with database tables by a user.

In certain embodiments of the invention, users want to retrieve and directly access and use data from production database tables or from third party database sources. These are database tables already processed and in IT's data management programs. However, users do not have the technical database skills and knowledge of the commands to normally access this type of data source nor does IT or management wish to have end users access and probably contaminate production data sources prior to the invention because of the technical and financial risks.

Therefore the embodiment is providing direct access to existing database tables by the end user without impact to data quality and control. The access is determined by the IT data management team for the user. The embodiment is a simplified use of the Data Process Engine and a restricted use of function in the Database Table Process 602. The embodiment is the basis for the process of Rapid Data Prototyping The embodiment of Rapid prototyping provides users a very fast and secure means of user productivity improvement through direct accessing of database tables to investigate and evaluate that table's value proposition for the user and performing their work objectives.

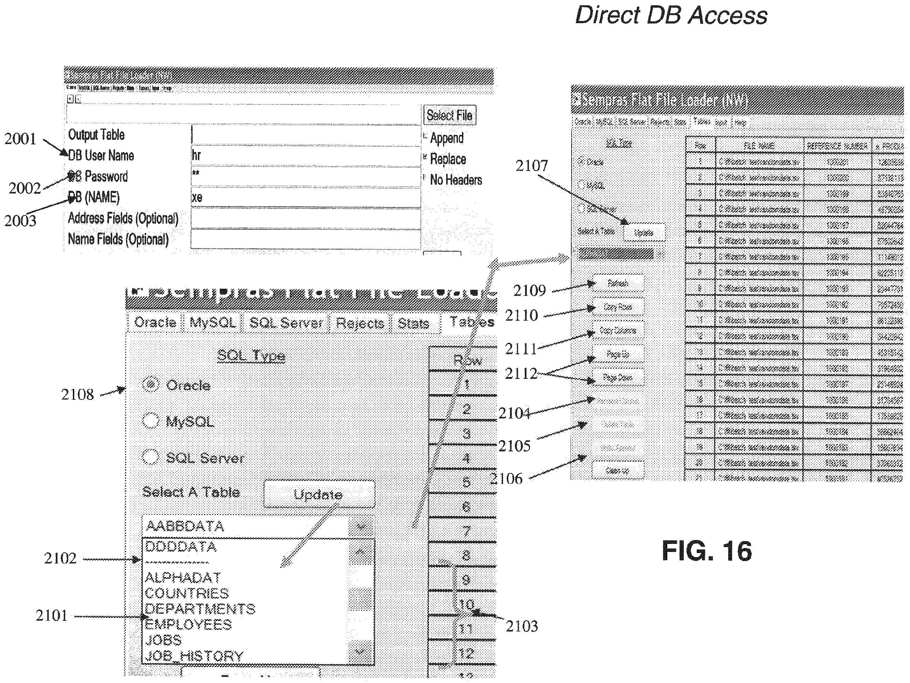

An example embodiment for access of a database is executed with a subset of the fields required for a flat file to database translation is shown in FIG. 16. The user enters in the Database User Name 2001, the DB Password 2002 and the commercial database name abbreviation 2003. There are no other process fields to type and the user clicks on the Database Process screen shown in FIG. 7 and then clicks on the operations data library box 904 to have a pull down listing of all database tables below the line 2102 for the user to access a Data Table process screen such as that shown in FIG. 16 and access the operations data library 2103. The embodiment does not select a path to access the data since the embodiment is accessing a library of existing tables 2102/2106. The user access of the Database Process Screen has a reduced set of options for processing tables than the standard file to table data structures. For data quality, consistency and control requirements three of the tabs are inactive when direct access to an existing database table is invoked. The Rename Column 2104 Delete Table 2105 and the Un-append tab 2106 are inactive due to the design criterion and end users skill set limitations. The design point is data quality and data integrity management The database tables a user has access to are listed in the operations data library.. The end user does not have the technical skills, experience or training to effectively manage data across an organization; and the impact to changing column heading or undoing an append of existing business or production database tables. The Delete tab 2105 is de-deactivated in order to prevent the very serious situation of unauthorized or accidental data loss since at this level these are original source database tables' status within the invention's data management processes.

The embodiment provides the database tables a user has permission to see with by the Update Tab 2107. The Update Tab 2107 when clicked on will go out to the database libraries access and profile tables by search for the user ID and security access permissions. Where the embodiment retrieves the permitted database tables or segment of tables the user is authorized to access and lists them in the operations data library 2103 for access by the user. The use of the Update tab is the discretion of the user as to frequency of updates to their access table options Below the dotted line of the pull down tab access is supported by the Update Tab 2107. of the table names. The invention does not require specific naming protocol per se for the access. The table naming convention is designed by the IT group of the organization not the invention.

In certain embodiments of the invention the user can rapidly through Refresh Tab 2109, Copy Rows 2110, Copy Columns 2111, Page Up and Page Down 2111 and the sub processes of Sort and Filter/Search retrieve a copy of the table records wanted by the user in their work responsibilities. Production databases are key sources of quality data for users to access versus the traditional process of manual data record entry or complex downloads from a flat file to a spreadsheet where data errors and rejects are not supported by spreadsheet software. The type of database in this process is supported by the invention. If the database, for example is Server SQL, is not active on the compute platform accessing existing data bases 2108 then the user cannot access that vendor version.

According to certain aspects, the invention improves data quality by having the users access existing records and avoid time and effort with data record quality issues from manual entry of data from incompatible sources. According to further aspects, the invention is a data management and use system designed to support end users working with multiple incompatible data file structures without the technical skills to use complex system level software. Second, to provide users with a wider scope of data source access including the potential to access production database tables without the normal level of technical skills or training. In accordance with these and other aspects, in embodiments such as that shown in FIG. 5, the invention's system support components include a Rejects 605 and Stats/Metrics systems 606.

Returning to FIGs. 6 and 8, in certain embodiments of the invention, there are two options to processing flat files for an end user. The first is a flat file having a zero row header record that has the field names of the record in the first or zero row 1001. The user has a second flat file record structure called a no header record flat file. The invention has a separate Data Process Engine method 602 and processes that supports a no-header flat file and provides default column headings in database format when the flat file is processed into a database table.

The user begins the process with the Data Process File Screen in FIG. 6. The design of the invention is to have as consistent flow of processes as possible. This is to reduce the complexity of what the user is required to know in order to use and re-structure data files for the user's purpose. The user utilizes the same processes as the zero record header on this screen. Via point and click, the user finds the file 703 with no header record 2401; clicks on the Select File 712 tab and the path to the data is established. The Output Table 704 is typed, the DB User Name 705 is entered by typing, the DB Password 706 is also entered and the DB Name 707.

In certain embodiments of the invention the user has the process options to split out delimited fields of address 708 and name 709 automatically into subfields for address 708 of street, city, state, zip code and for name 709 the first, middle, last as identified by the user. The user also has the option to create automatically a batch process for DOS command execution with clicking on the clipboard command 717 after the upload 716 command is completed. This is utilized more by IT to set up repeat data pulls for the invention such as pulling a web log systems or transaction table for further IT analysis.

In certain embodiments of the invention the user then clicks on the No Header Checkbox 715 on the Data Process screen. This notifies the invention it will be using processes designed specifically to work with a no header file. Once the user clicks on the No Header option 715 the final step is to click on the Upload Tab 716 to launch the same process as done for the zero header record.

The internal processes of the invention code are executed in memory to create the cross references between the flat file to the database table as in the original processes. Determining delimiters from the first line automatically and loading the data to the table. And as in the zero header sequence, the completion of the translation of the flat file record and fields of data to a database table with the same number of records and fields with a sub process screen showing the Upload Results 802. The recorded information categories are the same as in the original processes. In certain embodiments of the invention, the flow of processes and the methods is designed to be as consistent as possible. This means keeping parameter function to a minimum and thereby reducing complexity of the design and use for the end user.

Again, the user clicks on the Database Table Screen shown in FIG. 7. They have the option to review the file via clicking on the Input Tab 922 or clicking on the operational library pull down tab 903 access the table with the no header table and clicking it to the file box 903. The user then clicks on the Refresh Tab 904 and the no header database table is displayed.

For example, as shown in FIG. 17, in certain embodiments, unlike the zero row header file having column names to use, the invention creates default name header for each column (data field) 2403 in the table on a one to one field basis between the flat file and the database table 2402. The generated column names are generic 2403 A_Column 1, A_Column 2, etc. The user changes the names via the rename column tab process 2412. The default names are in the structure for the database vendor being used, in the example this is an Oracle database and therefore naming structure. The user clicks on the Rename Column Tab 2412 and the sub-process screen 2404 displays. The user enters in new column header names for each column of the table 2405, 2406, 2407. Click the OK button and the column header names are modified from default definition in the table 2408 to the user's designation 2409 to A_Street, 2410 to A_City, and 2411 to A_State. The user can continue to change the column header names at their discretion.

In certain aspects of the invention the Reject 605 and Stats/Metrics 606 can be accessed through each their individual screens of the invention, such as Reject Tab 919 and the Stats/Metrics Tab 920 in FIG. 7. The tabs being on the screens enables the user at any time, to access other core functions or database options without a delay due to backing out of a table process or other action. The objective is to have consistent work flows, supported by screens having as much common function tabs as the invention permits in order for the user to execute the data management and use processes with consistent design and the removal or elimination of complex number and levels of application screens being required.

The Rejects 605 and Stats/Metrics systems 606 are methods and processes that run in-memory on the compute platform supporting the invention. They support the Data Process Engine 602 loading data files to database tables and the commands and functions of the invention.

The embodiment is the Rejects system 605 is to capture specific information on records that have not qualified for the database table target in the translation processes. The failing records are captured along with base process information about the file, into the reject table for all the files processed by the invention by the user. Each of the bad records will be captured and placed in the Reject table row and remain in the table until the records are repaired or deleted from the table by the user or the IT staff.

In addition to errors directly caused during the data load sequence, there are data record load errors caused by the support data file, spreadsheet and commercial database software. The invention being connected and able to bridge many disparate, incompatible data files and tables does not remove the design limits of the vendor's software. For example in EXCEL 2003 the maximum of data rows permitted per worksheet is 64,000 rows. Beyond that point and there is a Microsoft error. If the user were to be working with Office 2010 the data row limit per worksheet is 1 million rows. With databases the larger vendors have similar design limits impacting the invention. For example, the number of segment fields in a database record is approximately 100 segments. The total bytes or characters of data per record with all segments for the large database vendors are 4,000 bytes or characters. In these examples, the invention does not change the limits but must work within their respective profiles and limits. And records from a data load can be placed in the Rejects table due to these limits.

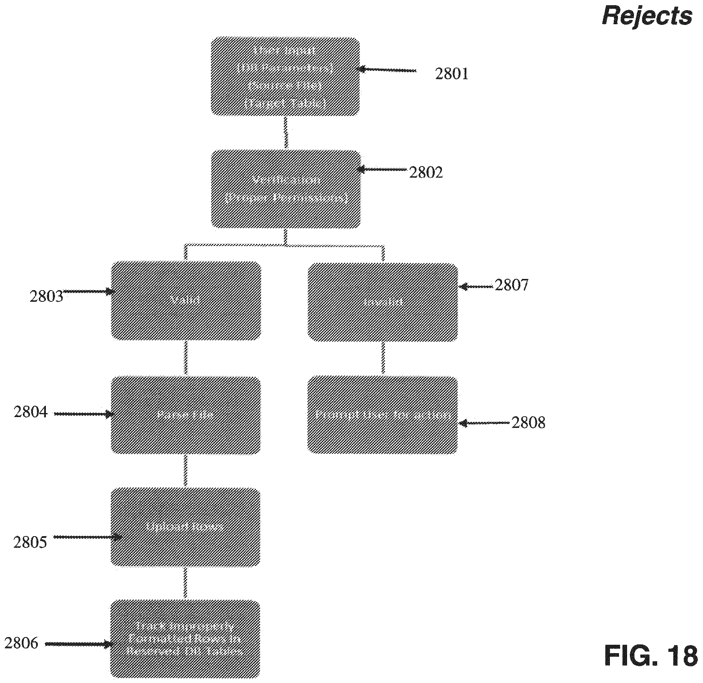

An example implementation of the Rejects system 605 is further illustrated in the flowchart of FIG. 18. In embodiments, the Rejects system 605 is a tracking and capture process that tracks the database 2801 transactions for the purpose of verifying 2802 the records are correct in the field length, record length processes 2803 to maintain the input data integrity. A series of steps supporting the user ability to immediately know the data condition of the file processed. The embodiment comprising parsing 2804 the input data into columns, verifying each row contains the proper number of columns, and tracking rows (records) that do not fit within the permitted limits and placing the non-qualified rows (records) into the Reject tracking processes 2806 while uploading the valid rows (records) 2805. The embodiment, unlike spreadsheet software not only captures the bad records, but provides the user a means to access all the rejected record instances from a single location for further process options and actions to fix the record or potentially to delete the invalid row 2808. An invalid record where the delimiters versus the field and/or record does not match the expected length 2807 initiates a file warning message being displayed stating a failure to process. The embodiment design can capture and retain large amounts of rejected records.

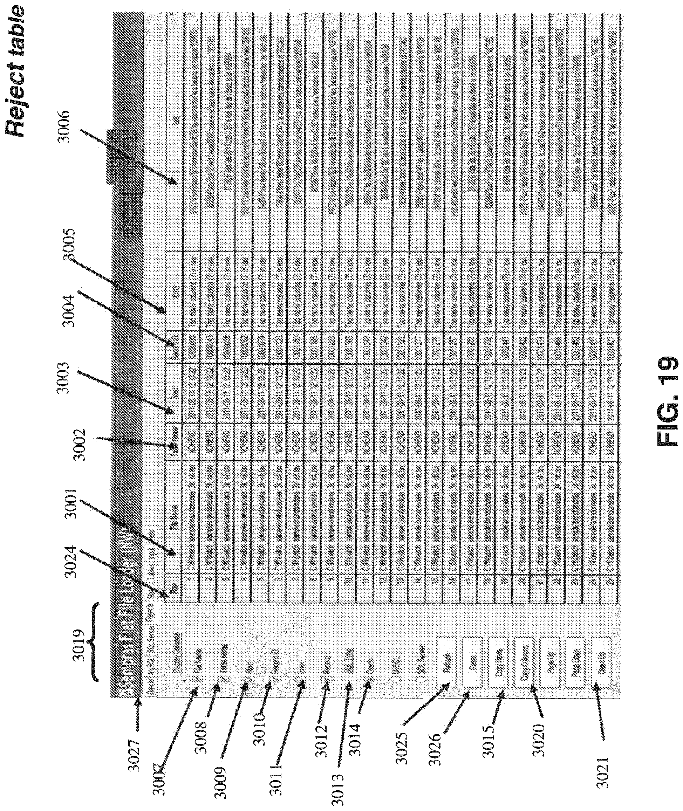

In certain embodiments of the invention shown in FIG. 19, the Rejects process has a structure field formats for the metrics and the rejected record 3006 kept in a variable length column that meets the record's length. All rejected records are kept in the table and are identified by the data flat file they originated from 3001. Additional information includes:
a. Row 3024: Row number in the Reject table
b. File name 3001: where the data file used
c. Table Name 3002: Name of the target table
d. Start 3003: time stamp when started
e. Record ID 3004: is internal record control for invention processing
f. Error 3005: type of reject error that is display when the Upload 716 is executed
g. Record 3006: the full data file record prior to being converted to a database row record.

Certain aspects of the invention can be embodied in the Reject tracking information kept within the Reject table. There are 6 base tracking categories. They include for each record rejected:
a. File name 3007: The path of the selected flat file for access by invention
b. Table name 3008: Name of the Database output table
c. Start 3009: Date and time stamp when the process was initiated
d. Record ID 3010: Rejects tracking record ID for processing of the table
e. Error 3011: Type of error with the record
f. Record 3012: Copy of all the fields in delimited structure for the rejected record.
g. SQLType 3013: What form of database being used
h. Oracle, MySQL, SQL Server 3014: Oracle is one of three current options.

### Embodiment can support additional database vendor options

In certain embodiments of the invention the user can change the display columns they wish to see in the Reject database Table display. The user turns off the checked box next to the reject tracking element and that element does not appear as a column heading on the Reject database table display for the entire table. The tracking information is retained by the internal Reject Tracking Table SQL table until the user determines to display that tracking information at a later point in time if appropriate. Each time the user changes the display of Reject Table information the Refresh Tab 3025 is used to reset what appears on the screen. When the reduced set of the Reject Table data metrics is required to be reset to full data fields being displayed the user clicks the Reset Tab 3026 to show all data fields in the Reject Table.

In certain embodiments the sub processes of Sort and Filter/Search are active with the Reject Table. These processes are valid on all fields including the rejected row (record field). In addition there invention provides a time stamp based filter process is conducted using the sub-process filter screen 3023: Select First offset filter settings. This time stamps are the filter process instead of the first characters or case sensitive filter options with the records of a database table after a data load from a file data source. The centric data point of the design is the time stamp being used for the process filter priority since there is the potential for multiple instances of the same file having rejected or bad records. The Reject records have significant variance in the fields of the data file kept in the Reject Table and contains reject rows from many different data file sources at different points in time. And time stamp accuracy assists in reject processing in order to keep data in synch with the original records that were successfully translated into a database table.

However, the invention is not limited to the Reject tracking of elements described above or shown in the referenced figures. For example, additional tracking criterion can be added. The current design is a base set of tracking information for the user to assess what action or no action with regards to rejected data records.

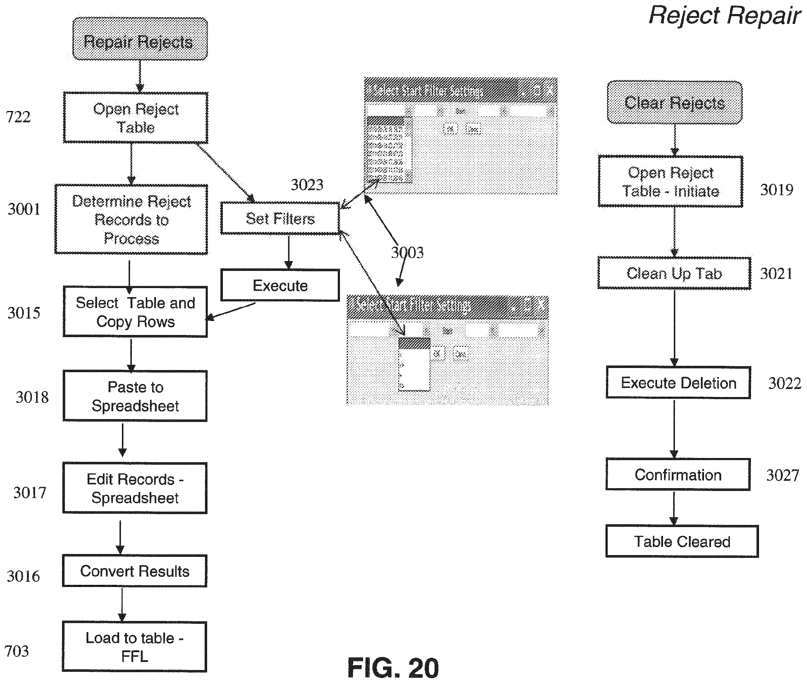

In certain embodiments the Rejects system 605 provides the user the ability to repair rejected records in the Rejects table. The method is similar to the functions performed with a copy to a spreadsheet process. As shown in FIG. 20, the user opens the Reject Table Tab 722, and evaluates 3001 which of the rejected records are going to be evaluated, repaired or possibly deleted from the table. The user selects the rejected records by time stamp filter. As described above, the time stamp is used since the entire rejected record is kept in the record field and the remainder of a reject record are metrics including time stamp. The user determines the records rows to use by start time stamp and qualifiers including greater than, less than, equals, etc. The time stamp is based on the Stats/Metrics time stamp as a source The Rejects table will display the records meeting the filter criteria, 3015. The user then copies 3015 the Record column or the entire record rows that qualify to a spreadsheet for repair processing using the spreadsheet compute functionality. The records can be edited 3017, fields replaced, etc. Once the repairs are complete the user converts 3016 the spreadsheet worksheet to a CSV file and then it is loaded by the user to the designated table using the standard flat file load 703 process and methods. Once the repair process is complete the user can delete the records processed and with the Refresh tab reset the display to the initial display of all reject records in the Reject Table.

In certain embodiments the Reject system is a table that is maintained by the invention for all data load actions performed 3019 by the Data Process Engine 602. The Reject Table 3019 is translated into the commercial database deployed by the user for their data load translation to a database target table. Certain aspects of the invention the Reject Clear/Clean up 3021 or Delete process is executed in a similar process as the repair process. The user opens the filter time stamp sub-screen, selects the time stamp start time for the filtering and then once the filters are set 3023 clicks on the Clean Up tab 3021 and the deletion 3024 of the selected records is completed with a confirmation screen 3022. The user can also leave the repaired records in the Rejects table as determined by It management processes and methods

The Reject Table 3019 is not maintained in a specific database vendor software but as a SQL table in the compute platform. This enables the flexibility of re-setting the Reject information into the current database displayed by the compute platform utilized by the end user. The design objective was to have the user focus on the rejected records and the corresponding information but has the Reject records in a database format during display.

The centric data point of the design is the time stamp being used for the process filter priority. It uses time stamps 3003 and qualifiers such as greater than, less than, equal, etc. 3003 as the filter process 3023 instead of the first characters or case sensitive filter options with the records of a database table after a data load from a file data source is necessary since there may be repeat instances of a data file or table being replaced or update. In addition to the time filter process, the record sort and filter records commands and copy to spreadsheet are active with the Stats/Metrics system 606. The time stamp process can also be used in determining what records to retrieve from the Reject table 3027 . The user can do search, sort and copy the Reject records directly or use the time stamp filter option depending on the precision level required by the user about the rejected records and the associated files.

This enables the user to use the Copy Row 3015 or Copy Column 3020 function to copy the Reject record data fields and copy 3016 them into a spreadsheet work file 3018. The user can then edit and process 3017 the downloaded Reject records and can return the repaired records to a database table via a CSV conversion and then through the Data Process Engine 602. If the the data not needed then the records can be deleted from the Rejects Table 3027 and/or the spreadsheet. The embodiment provides the end user with the ETL or data repair capability via the spreadsheet software which is the center of the user's structured or key based data skill sets. The repaired records are then saved as a spreadsheet CSV file. The repaired rows (records) can then be loaded into the database table for further user processes and work requirements via the Append process. Again it is important to note the repair of a row (record) is intended for end user work purpose and is not a replacement for production systems reject and repair record processes.

In certain embodiments the user can delete rows in the Reject Table through the Clean Up Tab 3021. The tab is clicked on by the user, a sub-process screen for the filter settings 3023 of the table. The user, if they have completed working with the rejected rows (records) of a specific data file will use the range or a single range of time stamp to delete the reject row record and their metrics. Once the user clicks OK tab on the filer range time stamp, a second sub-process screen 3022 requires a second validation prior to deleting the rows in the table. Once data rows are deleted there is no recovery of data unless in an IT based data management organization back up process and review the rejects table 3027 for confirmation the records are deleted.

As discussed in connection with the example of FIG. 5, the second major sub-system is the Stats/Metrics system 606. In certain embodiments the Stats/Metrics also resides in-memory of the compute platform supporting the invention when the invention is active. The object based design captures a series of actions and outcomes with the data processes, table, files and records one row or line at a time. It utilizes SLQ statements to create the activity row as each occurs. The embodiment records each action by the participating database table and if also present each data file and the path to that data source. The objective is to have a record of actions performed by users to understand patterns of use for groups of users and IT to assist effective resource planning and processes. For example, if users state they require access to production database tables, the Stats/Metrics will document the user(s) who are accessing the production tables and what data content they are using. If little to no activity is present, then both user and IT data management staff can accurately asses what needs to be done, added or no longer accessed by the user.

In certain embodiments, although the screen content of the Rejects and Stats/Metrics processes are similar there are several differences in the design processes and processes available to the user and to IT systems and data management support. For example, the Stats/Metrics does not have a Delete 910 or Clean-Up Tab 3021 as is present with other GUI screens used in this invention. The statistics/Metrics data is intended to be a permanent documentation of the actions and data sources, processes used by the user. The user or IT have the option to Copy and move to a spreadsheet file or to another systems level database table for other analysis processing and evaluation.

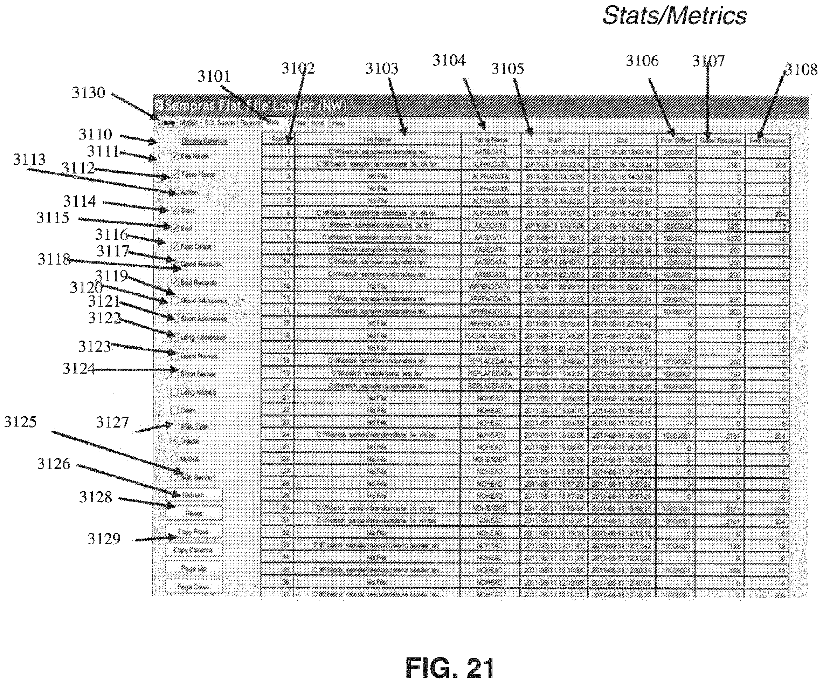

One embodiment of the Stats/Metric retains all data points in this table based on the user's process actions. As with the other object modules of the invention the table is kept in main memory when the invention is active state. It records each process action by the user(s) one row at a time. And as done with the Rejects Table the Stats/Metric SQL table is translated into commercial database utilized by the user with the invention. In the example shown in FIG. 21, the database being used is Oracle per the database vendor tab 3130. The design prevents maintaining multiple vendor centric database tables within the invention code. The stats information is to be kept as a record of actions by the invention as processed by the end user. The user does not have to coordinate maintaining commercial database versions. The IT data management team or designated individual has the responsibility with vendor version requirements.

The ongoing retention of process and activity records in the Stats/Metrics table is a standard operation basis for system logs, etc. IT requires various system log activities over time in order to evaluate patterns of data sources uses and be able to accommodate or reduce resources based on demand and access by end users. The objective is with a much broader direct data sources access, the management and control aspects of the invention requires integrated systems level log and management process and records of activity.

In certain embodiments of the invention the user can change the displayed columns they wish to see in the Stats/Metrics database Table display. The user can turn off the checked box next to the statistics data tracking element and that element does not appear as a column heading on the Stats/Metrics database table GUI visual display. The tracking information is retained by the internal Stats/Metrics Tracking Table file until the user determines to display that tracking information at a later point in time if appropriate. Each time the user changes the display of Stats/Metric Table information the Refresh Tab 3125 is used to reset what appears on the screen. When the reduced set of the Reject Table data is required to be reset to full data fields being displayed the user clicks the Reset Tab 3126 to show all data fields in the Stats/Metrics Table.

In certain embodiments the Stats/Metrics table can tailor what elements of the data are displayed. The user can unclick data fields on the left side of the screen to customize what is being monitored. However, the entire range of the data field statistics are captured and retained by the Stats/Metrics modules.

Certain aspects of the invention can be embodied in the Stats/Metrics tracking information kept within the Reject table as shown in FIG. 19. There are 16 base tracking categories. They include for each record rejected:
a. Row Column 3101: identifies for the stats metrics the individual activity records within the processes
b. File name/Column Field Heading 3110/3102: The path of the selected flat file for access by invention
c. Table name/Name of the Output Table: 3111/3103
d. Action 3112/: Type of action performed
e. Start/Column Field Heading: 3113/3104: Time the load process started
f. End/Column Field Heading: 3114/3105: Time the load process ended
g. First offset/Column Field Heading: 3115/3106: Beginning reference number for the action performed
h. Good Records/Column Field Heading: 3116/3107: Count of the records loaded successfully
i. Bad Records/Column Field Heading: 3117/3108: Count of the records that did not load
j. Good Addresses 3118: Count of the records which address sub-fields were loaded successfully
k. Short Addresses 3119: Count of the records which address sub-fields were too few
l. Long Addresses 3120: Count of the records which address sub-fields were too many
m. Good Names 3121: Count of the records which name sub-fields were loaded successfully
n. Short Name 3122: Count of the records which name sub-fields were too few
o. Long Names 3123: Count of the records which name sub-fields were too many
p. Delim 3124: Delimiter used

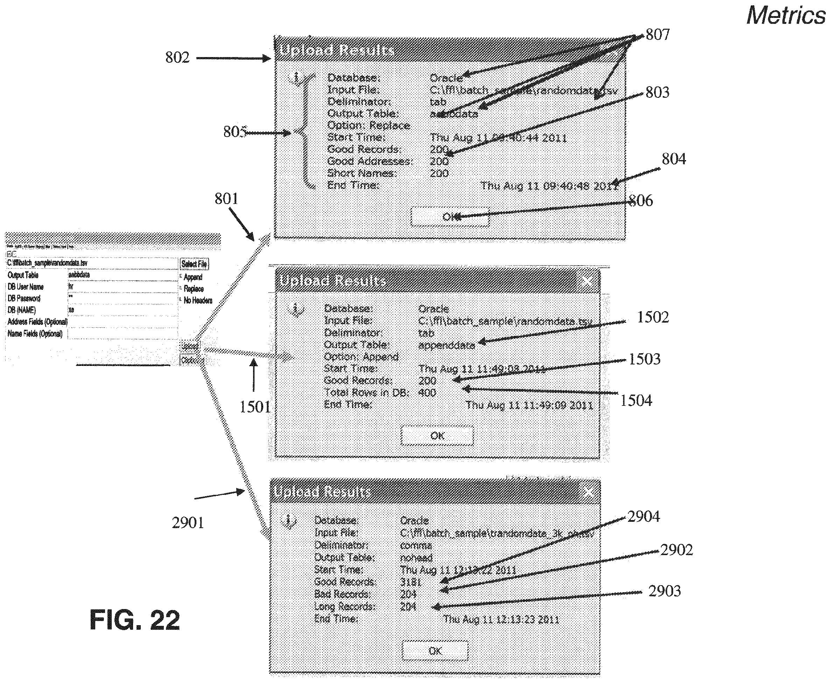

In certain embodiments of the invention, the Stats/Metrics system accumulates data metrics on the processes applied to data sources by the user. This permanent table records 16 metric measurements that are maintained even when a specific metric is not displayer per the user's option. In FIG. 22 are three examples of the execution metrics displayed to the user upon a data translation or process being executed.

Certain aspects of the invention are when a data file is translated into a database table create, Rename Column, an Append or Undo Append, clean Rejects, replace a database table with a new data file are processed are among the many actions recorded in the Stats/Metrics table. The user and IT staff have the ability to evaluate the data source use and processes being executed. It also tells the user at time of execution of a command option immediately what the details of source file, target table, number of rows, bad records, etc. by requirement of a click on the OK tab in order to proceed. The Stats/Metrics can be added to as requirements dictate but it provides point of information and reference for the user to utilize in working with their data sources.

In certain embodiments the post the Upload command execution the invention displays 801 Stats/Metrics sub-screen 802. The screen 802 presents a summary of the source and target actions processed by the invention 805, including the database vendor, the source data path, and if a flat file, the delimiter type - TSV, the output datatable -aabbdata. It also displays the rows of records processed and their status of good or reject status 803 along with the time stamp for the action 804.

In the examples displayed in FIG. 22, the invention shows the following Stats/Metrics results from each action by the user in their data processes:
a. A TSV data file randomdata.tsv has 200 records in the file translated into a database table named aabbdata 802.
b. an example of an append action 1501 where 200 records 1503 have been added to the existing appenddata 1502 table and in the append action the table now has 400 rows 1504.
c. An example of a file 2901 with over 3,000 records being successfully translated into an Oracle database table 2904 with 204 records being bad 2902 and also are long records 2903

In certain aspects of the invention the user has immediate feedback on their data and process actions. Speeds up the process of determining error or issues and then resolving them.

Returning to FIG. 21, the sub processes of the Copy Row 3128, Copy Column 3129 Sort and Filter/Search 3109 are active with the Stats/Metrics Table. These processes are valid on all fields including the rejected row (record field). The Filter/Search 3109 process is conducted using the sub-process filter screen 3023: Select First offset filter settings. The centric data point of the design is the time stamp being used for the process filter priority. It uses time stamps 3135 and qualifiers such as greater than, less than, equal, etc. 3137 as the filter process 3136 instead of the first characters or case sensitive filter options with the records of a database table after a data load from a file data source is necessary since there may be repeat instances of a data file or table being replaced or update. In addition to the time filter process, the record sort and filter records commands and copy to spreadsheet are active with the Stats/Metrics system.. The Stats/Metrics table has significant variance in the fields of the data file kept and the designed aspect of limited description content in the columns of the Stats/Metrics table requires a different filter/search algorithm for the user to copy the necessary records for their analysis. Furthermore, certain embodiments of the present invention use of time stamp accuracy is essential in statistics/actions processing in order to keep data in synch with the original files and tables processes that were conducted by the user.

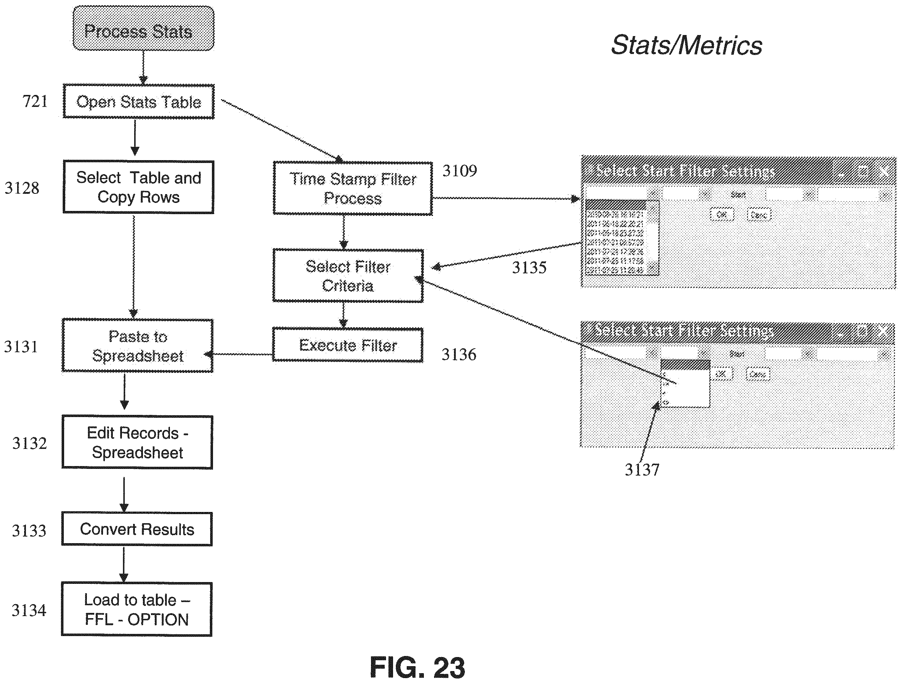

In certain embodiments the process of stats/metrics shown in FIG. 23 is opened using the Stats Tab 721 via point and click. The user determines what stats to process and what database table 3127 the user will display the metrics Utilizing the 3019 Reset tab 3126 will display all the metrics in the invention. It is an analysis design that works well with web log analysis by IT skilled users working to maintain an operating network. The execution processes are the same process flow as with the upload command which consists of select rows to copy 3128 by time stamp 3104, 3105. It also assists the IT group in evaluation of data access and use by the user in order to determine what data needs to be provided. This is a process that time of execution is the control factor in most analysis processes. The metrics selected by the user (end user or IT user) 3128 by the copy command 3128 and placed in a spreadsheet worksheet as determined by the user 3131. The invention is an open platform and the user has options to paste the copied data to different vendor spreadsheet software 3131. After creating the spreadsheet the user then can edit and process the Stats/Metrics data for analysis and decision processes 3133. After processing the user also has the option to load the processed Stats/Metrics records back into a database table 3134 specified by the user. In certain embodiments the edited records can be used for work analysis 3133 and/or placed into a database table 3134 designated by the user.

Although the present invention has been particularly described with reference to the preferred embodiments thereof, it should be readily apparent to those of ordinary skill in the art that changes and modifications in the form and details may be made without departing from the spirit and scope of the invention. It is intended that the appended claims encompass such changes and modifications.

The following numbered paragraphs set our various aspects and embodiments of the methods described herein.
1. A method of processing and managing data in an open platform data system through a computer user interface that accesses one or more data sources, the method comprising:
   providing a data process engine through the computer user interface that enables users to access and perform IT level data processes with the one or more data sources;
   providing a point and click command process for data access, process and management by users through the computer user interface; and
   providing an automated data liquidity process to transform and translate the one or more data sources between a plurality of database and file formats and into a working table, wherein users can copy specified rows and/or columns of the working table to a spreadsheet for ETL processes and actions.
2. A method according to paragraph 1, wherein the automated data liquidity process includes allowing users automatically split fields in data files by specifying possible content columns in the working table.
3. A method according to paragraph 1, wherein the automated data liquidity process includes allowing users to construct database column headings from a file structure/format in the one or more data sources.
4. A method according to paragraph 1, wherein the automated data liquidity process includes allowing users to rename a database table columns using the computer user interface.
5. A method according to paragraph 1, wherein the one or more data sources includes existing database tables, including production database tables.
6. A method according to paragraph 1, further comprising:
   providing a framework to capture and retain management control of ungoverned user files and tables uploaded from the one or more data sources.
7. A method according to paragraph 6, wherein the one or more data sources includes personal compute platforms, server platforms and storage sources.
8. A method according to paragraph 1, wherein the point and click command process includes processes to move data from a flat file to a database file to a spreadsheet to flat file and again to the same or new database file.
9. A method according to paragraph 1, wherein the data liquidity process supports multiple format structures for a same source data file where the user rapidly adjusts for data format, structure and has the option to perform base ETL commands in the spreadsheet format.
10. A method according to paragraph 1, further comprising:
   providing rapid data prototyping and table analysis and evaluation capability for users to directly access database table and file sources without knowledge of the data structures within the files or database tables prior to access.
11. A method according to paragraph 1, further comprising:
   tracking database transactions for the purpose of verifying input data integrity, and tracking rows for tracking database records and transactions in a Stats/Metrics object sub-system for the purpose of verifying input data integrity, the tracking step including:
   parsing input data into columns;
   verifying each row contains a proper number of columns;
   providing a support system to the data process engine for capturing a number of performance and results statistics for the user to evaluate when needed,
   wherein the support system captures each action by the user with data files and database tables, and wherein the IT staff can also monitor and evaluate the user's activity on their individual ID through a copy to spreadsheet file of the captured measurements required.
12. A method according to paragraph 11, wherein the stats/metrics data is kept in a file and will display in a database version designated by the user for processing.
13. A method wherein a user can append/add to existing database tables for ongoing project work, the method comprising:
   reading user input to determine a target table;
   verifying content of the table against the user input file;
   uploading contents of the user input file into the table upon verification;
   tracking upload statistics for other operation in a database table,
   wherein verification is done by parsing a number of columns in the header versus a number of columns in the table, and
   wherein if the original table performed input parsing, the appended table will parse the same columns as the original.
14. A method according to paragraph 13, further comprising
   allowing for removing automatically appended data in a database table, including:
   verifying user input to determine a target table;
   reading a tracking table to determine undoable actions;
   gathering user input to determine which transaction to undo; and
   removing selected transactions from the table,
   wherein the appended data can be utilized by the user.
15. A method for tracking database transactions for the purpose of verifying input data integrity, the method comprising:
   parsing input data into columns; and
   tracking rows that do not fit within allowed tolerances in a rejects table within the database;
   managing determination of rejected flat file records being repaired or removed during the transition from data files to database tables,
   wherein the rejects table is held as a file and is independent of all database software when stored and can be displayed in the database software designated by the user.
16. A method according to paragraph 15, further comprising: enabling a user to move between database vendors without impact to their reconfiguration of records in the rejects table.
17. A method according to paragraph 15, further comprising:
   enabling a user to repair or delete records in the rejects table.
18. A method according to paragraph 17, wherein record repair is defined through time stamp filter process.
19. A method according to paragraph 15, wherein record repair includes copying displayed database rows to a spreadsheet file, repairing them via a flat file format, and loading them to the user designated table via point and click.
20. A method according to paragraph 15, further comprising:
   providing a clean table command that enables deleting those rejected records not to be repaired.

## Claims

1. A tracking method for use in a data system in which users access and perform data processes and analyses with one or more data sources, using a point and click process to obtain a selected data liquidity process, wherein the selected data liquidity process is obtained without programming by users;
the tracking method comprising:
tracking, using a Statistics sub system, each of a number of selected data access, process and structure actions of the data liquidity process, wherein the Statistics sub system tracks for the purpose of verifying input data integrity, the tracking step including:
providing a support system to the data process engine for capturing a number of performance and results statistics for the user to evaluate when needed,
wherein the support system captures each action by the user, thereby allowing for tracing of each of the plurality of actions.

2. A method according to claim 1, wherein the data captured by the Statistics sub system is kept in a database table / file and will display in a database version designated by the user for processing.

3. A method according to claim 2, wherein the Statistics sub system database table / file provides a permanent documentation of the actions, data sources, and processes used by the user.

4. A method according to claim 2 or claim 3, wherein a user has the option to copy data from the Statistics sub system database table / file to a spreadsheet file or to another systems level database table for other analysis processing and evaluation.

5. A method according to any one of claims 2 to 4, wherein a user can select the columns of the Statistics sub system database table / file for display in an associated GUI visual display but all of the tracked user actions continue to be captured and retained for any non-displayed columns.

6. A method according to any one of claim 2 to 5, wherein the user is able to perform any one or more of the following actions on the Statistics sub system database table / file: Copy Row; Copy Column; Sort; Filter; and Search.

7. A method according to any one of the preceding claims, wherein the tracked user actions comprise any one or more of: translation of a data file into a database table; Rename Column; Append or Undo Append; clean Rejects; and replace a database table with a new data file.

8. A method according to any one of the preceding claims, wherein the Statistics sub system comprises a Stats/Metrics sub-screen for display in a GUI to present a summary of the source and target actions processed by the data system.

9. A method of processing and managing data in an open platform data system through a computer user interface that accesses one or more data sources, the method comprising:
providing a data process engine through the computer user interface that enables users to access and perform data processes and analyses with the one or more data sources; and
providing a point and click process to obtain a selected data liquidity process, wherein the selected data liquidity process is obtained without programming by users;
wherein the actions of the users are tracked using a method according to any one of claims 1 to 8

10. A method according to claim 9, further comprising allowing a user can append/add to existing database tables for ongoing project work, the method comprising:
reading user input to determine a target table;
verifying content of the table against the user input file;
uploading contents of the user input file into the table upon verification;
tracking upload statistics for other operations in a database table;
wherein verification is done by parsing a number of columns in the header versus a number of columns in the table;
wherein if the original table performed input parsing, the appended table will parse the same columns as the original; and
wherein the support system of the Statistics sub system captures statistics for the operation of appending/adding the new data.

11. A method according to claim 10, wherein Statistics sub system includes a Stats/Metrics sub-screen from which the user can tell the status of the append action.

12. A method according to claim 10 or claim 11, further comprising allowing for removing automatically appended data in the database table, including:
verifying user input to determine a target table;
reading a tracking table of the Statistics sub system to determine undoable actions;
gathering user input to determine which transaction to undo; and
removing selected transactions from the table,
wherein the appended data can be utilized by the user.

13. A method according to claim 9, further comprising tracking database transactions for the purpose of verifying input data integrity, the tracking including:
parsing input data into columns; and
tracking rows that do not fit within allowed tolerances in a rejects table within the database;
managing determination of rejected flat file records being repaired or removed during the transition from data files to database tables,
wherein the rejects table is held as a file and is independent of all database software when stored and can be displayed in the database software designated by the user.

14. A method according to claim 1 or claim 9, wherein the one or more data sources include a plurality of different database and file formats include respective database formats of a plurality of different database vendors, such that the data process engine is able to transform a copy of the structured data from any of these different database formats of the plurality of different database vendors into the one of several file formats.

15. A method of processing, analyzing and managing data in an open platform data system through a computer user interface that accesses one or more data sources, the method comprising:
providing a data process engine through the computer user interface that enables users to access and perform data processes and analyses with the one or more data sources, wherein there are specific limits to the processes the user is permitted in order to maintain data quality integrity and consistency;
providing a point and click process for selecting processes by users through the computer user interface, within said specific limits, to obtain a selected data liquidity process;
wherein the selected data liquidity process is obtained without programming by users; and
providing the selected data liquidity process to the data process engine to cause transforming of the data sources between a plurality of database and file formats and a working table;
wherein the actions of the users are tracked using a method according to any one of claims 1 to 8.
